(19) Europäisches Patentamt
European Patent Office
Office européen des brevets

(11) **EP 3 606 756 B1**

(12) **EUROPÄISCHE PATENTSCHRIFT**

(45) Veröffentlichungstag und Bekanntmachung des Hinweises auf die Patenterteilung:
**07.08.2024 Patentblatt 2024/32**

(21) Anmeldenummer: **18717215.0**

(22) Anmeldetag: **05.04.2018**

(51) Internationale Patentklassifikation (IPC):
*B33Y 50/02* (2015.01)    *B29C 64/282* (2017.01)
*B29C 64/393* (2017.01)    *B29C 64/386* (2017.01)
*B29C 64/153* (2017.01)    *B22F 3/105* (2006.01)
*B22F 10/28* (2021.01)    *B22F 10/366* (2021.01)
*B22F 10/80* (2021.01)    *B22F 12/45* (2021.01)

(52) Gemeinsame Patentklassifikation (CPC):
(C-Sets verfügbar)
**B29C 64/153; B22F 10/28; B22F 10/366;
B22F 10/80; B22F 12/45; B29C 64/282;
B29C 64/386; B29C 64/393; B33Y 50/02;**
B22F 2999/00; B33Y 10/00; B33Y 30/00;
B33Y 50/00; Y02P 10/25          (Forts.)

(86) Internationale Anmeldenummer:
**PCT/EP2018/000158**

(87) Internationale Veröffentlichungsnummer:
**WO 2018/184726 (11.10.2018 Gazette 2018/41)**

(54) **VERFAHREN ZUR ADDITIVEN FERTIGUNG EINES DREIDIMENSONALEN BAUTEILS**

METHOD FOR ADDITIVELY MANUFACTURING A THREE-DIMENSIONAL COMPONENT

PROCÉDÉ DE FABRICATION ADDITIVE D'UN COMPOSANT TRIDIMENSIONNEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.04.2017 DE 102017107364**

(43) Veröffentlichungstag der Anmeldung:
**12.02.2020 Patentblatt 2020/07**

(73) Patentinhaber: **AMSIS GmbH
28359 Bremen (DE)**

(72) Erfinder: **PLOSHIKHIN, Vasily
28209 Bremen (DE)**

(74) Vertreter: **Ellberg, Nils
Meissner Bolte Patentanwälte
Rechtsanwälte Partnerschaft mbB
Hollerallee 73
28209 Bremen (DE)**

(56) Entgegenhaltungen:
**EP-A1- 2 875 897        WO-A1-2004/056510
US-A1- 2017 001 243**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
B22F 2999/00, B22F 10/28, B22F 10/85,
B22F 2203/03

**Beschreibung**

Die vorliegende Erfindung betrifft ein Verfahren gemäß Anspruch 1 zur additiven Fertigung eines dreidimensionalen Bauteils aus mehreren Bauteilschichten durch mehrfaches inkrementelles, insbesondere schichtweises, Hinzufügen von pulver-, draht- oder bandförmigem, insbesondere metallischem, Bauteilausgangsmaterial und, insbesondere inkrementelles, formgebendes Verfestigen durch jeweils selektives Schmelzen und/oder Sintern des Bauteilausgangsmaterials mittels einer durch mindestens eine Energiequelle, insbesondere lokal, gemäß einer Scanstrategie eingebrachten Wärmemenge, wobei das Verfahren eine Aufteilung jeder Bauteilschicht in Segmente umfasst, und ein Verfahren zur Berechnung von Trajektorien und zeitlicher Reihenfolge von Wärmeeinträgen zwecks entsprechender Ansteuerung einer Anlage zur additiven Fertigung eines dreidimensionalen Bauteils.

Insbesondere geht es um additive Fertigungsverfahren, bei denen der Energieeintrag, insbesondere Wärmeeintrag, lokal erfolgt.

Mit "Bauteil" soll auch ein Bauteil inklusive Bauplatte (Basisplatte) und Stützstruktur(en) gemeint sein. Zudem soll der Begriff "Bauteil" auch einen Bauteil-Satz, wie z. B. ein in einem Baujob in einem Bauraum gefertigtes Konstrukt, das z.B. aus mehreren, z.B. identischen, Einzelbauteilen bestehen kann, umfassen.

Als Energiequelle(n) kann/können zum Beispiel ein Lichtbogen, ein Plasma bzw. Plasmastrahl, ein Laser- oder Elektronenstrahl oder ähnliches verwendet werden. Das additive Herstellungsverfahren kann insbesondere ein strahlbasiertes additives Herstellungsverfahren, wie z.B. selektives Laserschmelzen oder selektives Elektronenstrahlschmelzen, sein. Das Bauteilausgangsmaterial kann aus Metall, Kunststoff oder Keramik hergestellt werden. Es kann auch z.B. ein Pulver, ein Pulver-Fülldraht oder - Füllband sein.

Bei dem additiven Herstellungsverfahren, das auch als generatives Herstellungsverfahren bezeichnet wird, kann es sich beispielsweise um Lichtbogen-, Plasma-, Laser- und Elektronenstrahlauftragsschweißen und allgemeiner Auftragsschweißen, insbesondere Pulverauftragsschweißen, Laser- und Elektronenstrahlschmelzen, Lasersintern und alle weiteren Verfahren handeln, bei denen Material in der Schmelze zur Generierung eines Bauteils selektiv aufgetragen wird.

Als Materialauftragsverfahren sind z.B. Pulver- oder Drahtauftragsschweißen bei additiver Fertigung metallischer Werkstoffe oder z.B. Fused Deposition Modelling-Technologien zur additiven Generierung von Kunststoffbauteilen denkbar.

In den heutigen Anlagen zur additiven Fertigung von dreidimensionalen Bauteilen wird die Strategie des Energieeintrags, insbesondere des Wärmeeintrags, hauptsächlich rein geometrisch ausgelegt. Dabei erfolgt eine Unterteilung der zu generierenden Schichtgeometrie in einzelne, normalerweise rechteckige Segmente (oft als "Insel" oder "Streifen" benannt). Innerhalb eines Segments werden äquidistant geradlinige Scanvektoren (Belichtungsvektoren) parallel zu den Segmentgrenzen ausgelegt. Der eigentliche Energie- bzw. Wärmeeintrag erfolgt z.B. durch einen Laser entlang eines Scanvektors. Mit Hilfe einer Scanvorrichtung werden mehrere Scanvektoren innerhalb eines Segments nacheinander erzeugt. Mit anderen Worten wird die Energie- bzw. Wärmemenge mittels einer Scanstrategie eingebracht. Mit dem Begriff "Scanstrategie" soll hier in erster Linie die Beschreibung der Konsolidierung eines definierten Bereichs in einer Schicht aus einem Bauteilausgangsmaterial mit dem bereits generierten (konsolidierten) Teil des Bauteils durch Verschmelzung, Verschweißung, Versinterung oder Verfestigung mittels mindestens einer bewegten (insbesondere punktförmigen) Energiequelle unter Berücksichtigung von Ablenkwegen bzw. Scanwegen (Scanmuster) und Strahlparametern sowie der Zeitabhängigkeit der Ablenkwege und Richtungsabhängigkeit der Ablenkwege zur Erzeugung gewünschter Bauteil- und Gefügeeigenschaften gemeint sein. Die Scanstrategie umfasst ein Scanmuster (englisch: scaning pattern). Dabei handelt es sich um die geometrische Beschreibung der Ablenkwege oder Verbindungslinien von aufeinander folgenden Energieeinträgen, wenn zum Beispiel gepulst wird, zur Verfestigung der Bauteilkontur und/oder des Bauteilquerschnitts mittels mindestens eines Strahls oder einer anderen Wärmequelle.

Gemäß der DE 100 42 134 C2 wird eine bessere Gleichmäßigkeit des Energie- bzw. Wärmeeintrags dadurch erreicht, dass bei der Generierung einer Bauteilschicht die Position der einzelnen Segmente nach dem Zufallsprinzip ausgewählt wird.

Während eines additiven Herstellungsverfahrens können durch den schichtweisen Aufbau und die lokale Energieeinbringung, insbesondere in der Nähe von Bauteilrändern, Wärmestaus und insbesondere lokale Überhitzungen ("Hotspots") entstehen. Dies kann zu einer Beeinträchtigung der Bauteilqualität und insbesondere der Oberfläche des Bauteils aufgrund von Ansinterungseffekten oder unerwünschten lokalen Deformationen (Verzug) führen.

In der US 2017/0001243 A1 wird eine Vorrichtung zum Herstellen von Bauteilen um Pulverbettverfahren beschrieben, bei der Deformationen dadurch verhindert werden sollen, dass eine Bestrahlung des Pulvermaterials nur in den Bereichen des Pulverbetts erfolgt, in denen sich eine vorbestimmte stabile Temperatur eingestellt hat, um große Temperaturunterschiede zwischen bestrahlten und nicht bestrahlten Bereichen zu vermeiden.

Aus der WO 2004/056510 A1 geht hervor, dass ein Verzug des Bauteils vermieden werden kann, wenn die Bestrahlung in allen Teilbereichen einer Bauteilschicht so erfolgt, dass die Temperatur der Oberfläche des Bauteils während der Herstellung der Schichten in einem bestimmten Bereich bleibt, um Oberflächenspannungen durch zu starke Abkühlung zu vermeiden.

Der vorliegenden Erfindung liegt somit die Aufgabe zugrunde, ein Verfahren zur additiven Fertigung eines dreidimensionalen Bauteils bereitzustellen, mit dem Bauteile in einer besseren Qualität gefertigt werden können.

Erfindungsgemäß wird diese Aufgabe bei dem Verfahren gemäß Anspruch 1 gelöst. Die Ermittlung der lokalen Wärmeableitungsfähigkeit ist in der DE 102016120998.8 A1 beschrieben, deren diesbezügliche Offenbarung durch Bezugnahme hierin vollumfänglich aufgenommen wird.

Insbesondere handelt es sich um ein computer-implementiertes Verfahren.

Die lokale Wärmeableitungsfähigkeit charakterisiert die Fähigkeit eines Bauteilbereichs, Wärme in das Innere des Bauteils abzutransportieren.

Gemäß einer besonderen Ausführungsform kann vorgesehen sein, dass eine jeweilige Bauteilschicht in mehreckige Segmente, insbesondere rechteckige oder sechseckige Segmente, segmentiert wird.

Vorteilhafterweise werden zur Segmentierung einer jeweiligen Bauteilschicht Isolinien oder Quasi-Isolinien oder Punkte einer Isolinie der ermittelten lokalen Wärmableitungsfähigkeit zumindest zum Teil als Begrenzung der Segmente ausgewählt. Mit Quasi-Isolinien sollen Linien gemeint sein, die Isolinien recht nahe kommen. Die erzeugten Konsolidierungsspuren werden dabei gleichmäßiger abgekühlt, was zur Verringerung der lokalen Eigenspannungen und des lokalen Verzugs führen wird. Durch die zu erwartenden gleichen thermischen Bedingungen entlang der gesamten Scanvektoren wird eine bessere lokale Prozessstabilität (z.B. Aufrechterhaltung des konstanten Schmelzbades beim selektiven Laserschmelzen) gewährleistet.

Insbesondere kann bei dem Verfahren vorgesehen sein, dass ein Teil der Begrenzung der Segmente in Richtung eines Gradienten der Wärmeableitungsfähigkeit oder im Wesentlichen senkrecht zu den Isolinien bzw. Quasi-Isolinien der lokalen Wärmeableitungsfähigkeit ausgerichtet gewählt wird.

Vorteilhafterweise wird einer der Werte der lokalen Wärmeableitungsfähigkeit innerhalb des jeweiligen Segmentes, insbesondere ein durchschnittlicher Wert der lokalen Wärmeableitungsfähigkeit, in jedem der Segmente als ein Referenzwert der lokalen Wärmeableitungsfähigkeit eingesetzt wird. Das Niveau der lokalen Wärmeableitungsfähigkeit innerhalb eines Segmentes kann mit Hilfe einer Zahl / eines Wertes charakterisiert (repräsentiert) werden. Im allgemeinen Fall ist der Wert der lokalen Wärmeableitungsfähigkeit in unterschiedlichen Punkten eines Segmentes nicht konstant und ändert sich innerhalb eines Segmentes. Zur Charakterisierung des Niveaus der lokalen Wärmeableitungsfähigkeit kann einer der Werte der lokalen Wärmeableitungsfähigkeit innerhalb des jeweiligen Segmentes ausgewählt werden. Dieser Wert kann z.B. ein durchschnittlicher Wert der lokalen Wärmeableitungsfähigkeit sein. Als ein repräsentativer Wert, hier als Referenzwert bezeichnet, kann auch ein minimaler oder ein maximaler Wert oder deren Kombination ausgewählt werden.

Insbesondere kann dabei vorgesehen sein, dass die Reihenfolge der Erzeugung einzelner Segmente basierend auf den Referenzwerten der lokalen Wärmeableitungsfähigkeit gewählt wird.

Insbesondere kann dabei vorgesehen sein, dass die Segmente ausgehend von Segmenten mit einem niedrigen Referenzwert der lokalen Wärmeableitungsfähigkeit zu Segmenten mit einem höheren Referenzwert der lokalen Wärmeableitungsfähigkeit hin erzeugt werden.

Beispielsweise kann vorgesehen sein, dass der zeitliche Abstand beim Übergang zwischen aufeinanderfolgenden Segmenten verringert wird.

Alternativ wird gemäß einer besonderen Ausführungsform der Wärmeeintrag beim Übergang zum nächsten aufeinanderfolgenden Segment durch eine Erhöhung der Leistung oder Verringerung der Geschwindigkeit der Wärmequelle erhöht.

Gemäß einer weiteren besonderen Ausführungsform werden die Segmente ausgehend von Segmenten mit einem höheren Referenzwert der lokalen Wärmeableitungsfähigkeit zu Segmenten mit einem niedrigeren Referenzwert der lokalen Wärmeableitungsfähigkeit hin erzeugt.

Insbesondere kann dabei vorgesehen sein, dass der zeitliche Abstand bei Übergang zwischen aufeinanderfolgenden Segmenten erhöht wird.

Gemäß einer weiteren besonderen Ausführungsform wird der Wärmeeintrag beim Übergang zum nächsten aufeinanderfolgenden Segment durch eine Verringerung der Leistung oder Erhöhung der Geschwindigkeit der Wärmequelle verringert.

In einer weiteren besonderen Ausführungsform werden die Segmente einer Bauteilschicht gemäß dem Referenzwert der lokalen Wärmeableitungsfähigkeit in den jeweiligen Segmenten in mindestens zwei Gruppen aufgeteilt.

Insbesondere kann dabei vorgesehen sein, dass eine jeweilige Gruppe der Segmente aus solchen Segmenten gebildet wird, deren Referenzwert der lokalen Wärmeableitungsfähigkeit innerhalb eines bestimmten Intervalls zwischen zwei konstanten Grenzwerten der lokalen Wärmeableitungsfähigkeit liegen.

Wiederum kann dabei vorgesehen sein, dass für jede Gruppe der Segmente ein Referenzwert, insbesondere ein durchschnittlicher, Wert der lokalen Wärmeableitungsfähigkeit ermittelt wird.

Außerdem kann dabei vorgesehen sein, dass die Reihenfolge zur Erzeugung einzelner Gruppen basierend auf dem Referenzwert der lokalen Wärmeableitungsfähigkeit der jeweiligen Gruppe gewählt wird.

Darüber kann vorgesehen sein, dass die Gruppen ausgehend von Gruppen mit einem niedrigen Referenzwert der lokalen Wärmeableitungsfähigkeit zu Gruppen mit einem höheren Referenzwert der lokalen Wärmeableitungsfähigkeit hin erzeugt werden.

Insbesondere kann der zeitliche Abstand beim Übergang zwischen aufeinanderfolgenden Gruppen der Segmente verringert wird.

In einer weiteren besonderen Ausführungsform wird der Wärmeeintrag beim Übergang zur nächsten aufeinanderfolgenden Gruppe der Segmente durch eine Erhöhung der Leistung oder Verringerung der Geschwindigkeit der Wärmequelle erhöht.

Gemäß einer weiteren besonderen Ausführungsform werden die Gruppen ausgehend von Gruppen mit einem höheren Referenzwert der lokalen Wärmeableitungsfähigkeit zu Gruppen mit einem niedrigeren Referenzwert der lokalen Wärmeableitungsfähigkeit hin erzeugt.

Insbesondere kann dabei vorgesehen sein, dass der zeitliche Abstand beim Übergang zwischen aufeinanderfolgenden Gruppen vergrößert wird.

Gemäß einer weiteren besonderen Ausführungsform wird der Wärmeeintrag beim Übergang zur nächsten aufeinanderfolgenden Gruppe der Segmente durch eine Verringerung der Leistung oder Erhöhung der Geschwindigkeit der Wärmequelle verringert.

Vorteilhafterweise wird in jedem der Segmente ein Mittelpunkt ermittelt.

Insbesondere kann dabei vorgesehen sein, dass die Reihenfolge der Erzeugung einzelner Segmente basierend auf der Position des Mittelpunktes des jeweiligen Segmentes innerhalb der jeweiligen Bauteilschicht und auf dem Referenzwert der lokalen Wärmeableitungsfähigkeit in dem jeweiligen Segment gewählt wird.

Dabei kann vorgesehen sein, dass das erste zu erzeugende Segment in einer Bauteilschicht oder in einer Gruppe der Segmente zufällig oder nach einem minimalen oder maximalen Referenzwert der lokalen Wärmeableitungsfähigkeit oder nach einem minimalen oder maximalen Wert der Fläche des Segmentes ausgewählt wird.

Ferner kann vorgesehen sein, dass die Reihenfolge für das zweite und jedes weitere zu erzeugende Segment in einer Bauteilschicht oder in einer Gruppe der Segmente nach einer Entfernung der Mittelpunkte der Segmente gebildet wird.

Insbesondere kann dabei vorgesehen sein, dass als nächstes zu erzeugendes Segment aus den noch nicht erzeugten Segmenten einer Bauteilschicht oder einer Gruppe der Segmente ein Segment ausgewählt wird, dessen Mittelpunkt eine maximale Entfernung von dem Mittelpunkt des letzten erzeugten Segmentes aufweist.

Insbesondere kann dabei vorgesehen sein, dass, wenn die Mittelpunkte von mehreren Segmenten von dem Mittelpunkt des letzten erzeugten Segments gleichweit entfernt sind, das nächste zu erzeugende Segment zufällig oder nach dem minimalen oder maximalen Referenzwert der lokalen Wärmeableitungsfähigkeit ausgewählt wird.

Zweckmäßigerweise wird die Bauteilschicht mit Hilfe von mehreren, in unterschiedlichen Orten der Bauteilschicht zeitgleich wirkenden Energiequellen, insbesondere mit mehreren Lasern oder mit einer örtlich aufgeteilten Lichtquelle, erzeugt.

Insbesondere kann dabei vorgesehen sein, dass mindestens ein Paar nacheinander folgender Segmente aus der ermittelten Reihenfolge der Erzeugung der Segmente mit Hilfe von mindestens zwei unterschiedlichen Energiequellen zeitgleich erzeugt wird.

Gemäß einer weiteren besonderen Ausführungsform werden Scanvektoren in einem jeweiligen Segment, vorzugsweise äquidistant zueinander, entlang der Isolinien der lokalen Wärmeableitungsfähigkeit ausgelegt.

Erfindungsgemäß wird in jedem der Segmente die Richtung des Gradienten der lokalen Wärmeableitungsfähigkeit, vorzugsweise im Mittelpunkt des jeweiligen Segmentes, als eine Referenzrichtung des Gradienten der lokalen Wärmeableitungsfähigkeit eingesetzt. Der Gradient der lokalen Wärmeableitungsfähigkeit ist ein Vektor. Im allgemeinen Fall ist der Gradient der lokalen Wärmeableitungsfähigkeit in unterschiedlichen Punkten eines Segmentes nicht konstant, seine Richtung ändert sich innerhalb eines Segmentes. Zur Charakterisierung der Richtung des Gradienten innerhalb eines Segments kann es erforderlich sein, nur eine bestimmte Richtung zu definieren. Als eine repräsentative Richtung kann z.B. auch die Richtung, hier als Referenzrichtung bezeichnet, des Gradienten im Mittelpunkt eines Segmentes ausgewählt werden. Eine alternative Bezeichnung der repräsentativen Richtung wäre "eine Referenzrichtung ".

Erfindungsgemäß ist vorgesehen, dass die Richtung der Scanvektoren in einem jeweiligen Segment quer zur Referenzrichtung des Gradienten der lokalen Wärmeableitungsfähigkeit ausgelegt wird.

Weiterhin kann vorgesehen sein, dass in einem jeweiligen Segment eine Kante dieses Segmentes ermittelt wird, deren Normalvektor die kleinste Abweichung zur Referenzrichtung des Gradienten der lokalen Wärmeableitungsfähigkeit als die Normalvektoren der anderen Kanten dieses Segmentes aufweist, und parallel zu dieser Kante die Scanvektoren, vorzugsweise äquidistant, ausgelegt werden. Die Scanvektoren werden in diesem Fall parallel zu der Kante ausgelegt, welche am stärksten quer zur Richtung des Gradienten geneigt ist

Außerdem wird die Reihenfolge des Scannens der einzelnen Scanvektoren innerhalb eines Segmentes basierend auf der Referenzrichtung des Gradienten der lokalen Wärmeableitungsfähigkeit gewählt.

Erfindungsgemäß erfolgt der Versatz zwischen zwei nacheinander folgenden Scanvektoren innerhalb eines Segmentes in einer Referenzrichtung des Gradienten der lokalen Wärmeableitungsfähigkeit. Dementsprechend wird zunächst das unterste Scanvektor erzeugt, dann das nächste unterste usw., sukzessive von unten nach oben, in Richtung des Gradienten.

Zudem kann vorgesehen sein, dass der zeitliche Abstand zwischen aufeinanderfolgenden Scanvektoren sukzessive verkürzt wird.

Erfindungsgemäß erfolgt der Versatz zwischen zwei nacheinander folgenden Scanvektoren innerhalb eines Segmentes entgegen einer Referenzrichtung des Gradienten der lokalen Wärmeableitungsfähigkeit.

Schließlich kann bei dem Verfahren vorgesehen sein, dass der zeitliche Abstand zwischen aufeinanderfolgenden Scanvektoren sukzessive erhöht wird.

Des Weiteren liefert ein Verfahren, das nicht beansprucht wird zur Berechnung einer Scanstrategie zwecks entsprechender Ansteuerung einer Anlage zur additiven Fertigung eines dreidimensionalen Bauteils, wobei die Aufteilung einer Bauteilschicht in Segmente und/oder die zeitliche Reihenfolge der Erzeugung einzelner Segmente und/oder die Auslegung der Scanvektoren innerhalb eines Segmentes und/oder die zeitliche Reihenfolge der Scanvektoren innerhalb eines Segmentes auf Basis einer, insbesondere simulationsbasiert, ermittelten lokalen Wärmeableitungsfähigkeit oder anhand einer Funktion derselben in einer jeweiligen Bauteilschicht erfolgt. Dies geht dann in den Baujob ein.

Bei dem Verfahren kann einzeln oder in beliebigen Kombinationen vorgesehen sein, dass

- eine jeweilige Bauteilschicht (Li, Lk) in mehreckige Segmente, insbesondere rechteckige oder sechseckige Segmente, segmentiert wird,

- zur Segmentierung einer jeweiligen Bauteilschicht (Li, Lk) Isolinien (li, 12, l3) oder Quasi-Isolinien oder Punkte einer Isolinie der ermittelten lokalen Wärmeableitungsfähigkeit zumindest zum Teil als Begrenzung der Segmente ausgewählt werden,

- ein Teil der Begrenzung der Segmente (Si, S2, S3, S12) in Richtung eines Gradienten (Gl, G2) der Wärmeableitungsfähigkeit oder im Wesentlichen senkrecht zu den Isolinien bzw. Quasi-Isolinien der lokalen Wärmeableitungsfähigkeit ausgerichtet gewählt wird,

- einer der Werte der lokalen Wärmeableitungsfähigkeit innerhalb des jeweiligen Segmentes, insbesondere ein durchschnittlicher Wert der lokalen Wärmeableitungsfähigkeit, in jedem der Segmente als ein Referenzwert der lokalen Wärmeableitungsfähigkeit eingesetzt wird,

- die Reihenfolge der Erzeugung einzelner Segmente basierend auf den Referenzwerten der lokalen Wärmeableitungsfähigkeit gewählt wird,

- die Segmente einer Bauteilschicht gemäß dem Referenzwert der lokalen Wärmeableitungsfähigkeit in den jeweiligen Segmenten in mindestens zwei Gruppen aufgeteilt werden,

- eine jeweilige Gruppe der Segmente aus solchen Segmenten gebildet wird, deren Referenzwert der lokalen Wärmeableitungsfähigkeit innerhalb eines bestimmten Intervalls zwischen zwei konstanten Grenzwerten der lokalen Wärmeableitungsfähigkeit liegen,

- für jede Gruppe der Segmente ein Referenzwert, insbesondere ein durchschnittlicher Wert, der lokalen Wärmeableitungsfähigkeit ermittelt wird,

- die Reihenfolge zur Erzeugung einzelner Gruppen basierend auf dem Referenzwert der lokalen Wärmeableitungsfähigkeit der jeweiligen Gruppe gewählt wird,

- in jedem der Segmente ein Mittelpunkt ermittelt wird,

- die Reihenfolge der Erzeugung einzelner Segmente basierend auf der Position des Mittelpunktes des jeweiligen Segmentes innerhalb der jeweiligen Bauteilschicht und auf dem Referenzwert der lokalen Wärmeableitungsfähigkeit in dem jeweiligen Segment gewählt wird,

- das erste zu erzeugende Segment in einer Bauteilschicht oder in einer Gruppe der Segmente zufällig oder nach einem minimalen oder maximalen Referenzwert der lokalen Wärmeableitungsfähigkeit oder nach einem minimalen oder maximalen Wert der Fläche des Segmentes ausgewählt wird,

- die Reihenfolge für das zweite und jedes weitere zu erzeugende Segment in einer Bauteilschicht oder in einer Gruppe der Segmente nach einer Entfernung der Mittelpunkte der Segmente ausgewählt wird,

- Scanvektoren in einem jeweiligen Segment, vorzugsweise äquidistant zueinander, entlang der Isolinien der lokalen Wärmeableitungsfähigkeit ausgelegt werden,

- in jedem der Segmente die Richtung des Gradienten der lokalen Wärmeableitungsfähigkeit, vorzugsweise im Mittelpunkt des jeweiligen Segmentes, als eine Referenzrichtung des Gradienten der lokalen Wärmeableitungsfähigkeit eingesetzt wird,

- die Richtung der Scanvektoren in einem jeweiligen Segment quer zur Referenzrichtung des Gradienten der lokalen Wärmeableitungsfähigkeit ausgelegt wird,

- in einem jeweiligen Segment eine Kante dieses Segmentes ermittelt wird, deren Normalvektor die kleinste Abweichung zur Referenzrichtung des Gradienten der lokalen Wärmeableitungsfähigkeit als die Normalvektoren der anderen Kanten dieses Segments aufweist, und parallel zu dieser Kante die Scanvektoren, vorzugsweise äquidistant, ausgelegt werden,

- die Reihenfolge des Scannens der einzelnen Scanvektoren innerhalb eines Segmentes basierend auf der Referenzrichtung des Gradienten der lokalen Wärmeableitungsfähigkeit gewählt wird.

Schließlich liefert die vorliegende Erfindung auch ein oder mehrere computerlesbare(s) Medium/Medien gemäß Anspruch 10.

Zudem liefert die vorliegende Erfindung eine Anlage zur additiven Fertigung eines dreidimensionalen Bauteils aus mehreren Bauteilschichten durch mehrfaches inkrementelles, insbesondere schichtweises, Hinzufügen von pulver-, draht- oder bandförmigem, insbesondere metallischem, Bauteilausgangsmaterial und, insbesondere inkrementelles, formgebendes Konsolidieren des Bauteilausgangsmaterials durch jeweils selektives Schmelzen und/oder Sintern mittels einer durch mindestens eine Energiequelle, insbesondere lokal, gemäß einer Scanstrategie eingebrachten Wärmemenge, umfassend ein Bauraumgehäuse mit einer Bauplattform zur Abstützung eines oder mehrerer pulverbett-basiert additiv zu fertigenden Bauteils/Bauteile, eine Schichtenpräparierungseinrichtung zur Präparierung jeweiliger Pulverschichten auf der Bauplattform, eine Bestrahlungseinrichtung zur Bestrahlung der jeweils zuletzt präparierten Pulverschicht auf der Bauplattform und eine Steuereinrichtung zur Steuerung der Bestrahlungseinrichtung gemäß einem Verfahren nach einem der Ansprüche 1 bis 8.

Im Fokus der Erfindung steht eine schnelle Dissipation der eingebrachten Energie innerhalb des Bauteils, welche zu mindestens einem der folgenden Vorteile führt:

- besserer Temperaturausgleich innerhalb des generierten Bauteils,

- verringerte Gefahr lokaler Überhitzungen,

- Verringerung der Eigenspannungen und Verzugs,

- Erhöhung des gesamten Prozessstabilität,

- Gleichmäßigere Verteilung von Bauteileigenschaften.

[0059] - Weitere Merkmale und Vorteile der Erfindung ergeben sich aus den beigefügten Ansprüchen und der nachfolgenden Beschreibung, in der mehrere Ausführungsbeispiele anhand der schematischen Zeichnungen im Einzelnen erläutert werden. Dabei zeigt:

Fig. 1    eine schematische Darstellung zur Erläuterung der Definition der lokalen Wärmeableitungsfähigkeit;

Fig. 2    eine schematische Darstellung zur Erläuterung von Begriffen;

Fig. 3    eine schematische Darstellung zur Erläuterung eines Verfahrens zur additiven Fertigung eines dreidimensionalen Bauteils aus mehreren Bauteilschichten unter Verwendung von mehreren Energiequellen gemäß einer besonderen Ausführungsform der vorliegenden Erfindung;

Fig. 4    eine Seitenansicht eines achsensymmetrischen Bauteils;

Fig. 5    eine Draufsicht auf das Bauteil von Fig. 4;

Fig. 6    eine beispielhafte lokale Verteilung $D_i$ der Wärmeableitungsfähigkeit $D^{loc}$ in einer Bauteilschicht $L_i$ des Bauteils

Fig. 7      Isolinien I$_1$, I$_2$ und I$_3$ der lokalen Verteilung D$_i$ der Wärmeableitungsfähigkeit in einer Bauteilschicht L$_i$ aus der Fig. 6;

Fig. 8      eine Segmentierung einer Bauteilschicht L$_i$ des Bauteils von Fig. 4 gemäß einer besonderen Ausführungsform der vorliegenden Erfindung;

Fig. 9      eine Segmentierung einer Bauteilschicht L; des Bauteils von Fig. 4 gemäß einer weiteren besonderen Ausführungsform der vorliegenden Erfindung;

Fig. 10      eine Reihenfolge einer Konsolidierung der in der Fig. 9 gezeigten Segmente gemäß einer besonderen Ausführungsform der vorliegenden Erfindung;

Fig. 11      eine Auslegung von Scanvektoren innerhalb eines Segments gemäß einer besonderen Ausführungsform der vorliegenden Erfindung;

Fig. 12      eine Auslegung von Scanvektoren innerhalb eines Segments gemäß einer weiteren besonderen Ausführungsform der vorliegenden Erfindung;

Fig. 13      eine Segmentierung einer Bauteilschicht L$_i$ des Bauteils von Fig. 4 gemäß einer weiteren besonderen Ausführungsform der vorliegenden Erfindung;

Fig. 14      eine Segmentierung einer Bauteilschicht L$_i$ des Bauteils von Fig. 4 gemäß einer weiteren besonderen Ausführungsform der vorliegenden Erfindung;

Fig. 15      eine Vereinigung benachbarter Segmente gemäß einer besonderen Ausführungsform der vorliegenden Erfindung;

Fig. 16      eine Auslegung von Grenzen von Segmenten gemäß einer besonderen Ausführungsform der vorliegenden Erfindung;

Fig. 17      ein Segment S, das sich durch die in der Fig. 16 gezeigte Auslegung ergibt;

Fig. 18      ein Segment Sq, das sich durch Modifikation des Segments S der Fig. 17 ergibt;

Fig. 19      eine Erzeugung von gekrümmten Scanvektoren innerhalb eines Segments gemäß einer besonderen Ausführungsform der vorliegenden Erfindung;

Fig. 20      eine Auslegung von Scanvektoren innerhalb eines Segments gemäß einer besonderen Ausführungsform der vorliegenden Erfindung;

Fig. 21      eine symmetrische Segmentierung einer Bauteilschicht L$_i$ des Bauteils von Fig. 4;

Fig. 22      eine Reihenfolge der Konsolidierung einzelner Segmente der Segmentierung von Fig. 21 gemäß einer besonderen Ausführungsform der vorliegenden Erfindung;

Fig. 23      Segmentierungen einer Bauteilschicht L$_i$ des Bauteils von Fig. 4 gemäß einer weiteren besonderen Ausführungsform der vorliegenden Erfindung;

Fig. 24      eine Linearisierung einer Segmentierung gemäß einer besonderen Ausführungsform der vorliegenden Erfindung;

Fig. 25      eine irreguläre Segmentierung einer Bauteilschicht L$_i$ des Bauteils von Fig. 4;

Fig. 26      einen Spezialfall des Scannens einzelner Segmente gemäß einer besonderen Ausführungsform der vorliegenden Erfindung;

Fig. 27      einen Spezialfall des Scannens einzelner Segmente gemäß einer weiteren besonderen Ausführungsform der vorliegenden Erfindung in Seitenansicht; und

Fig. 28      eine Draufsicht desselben.

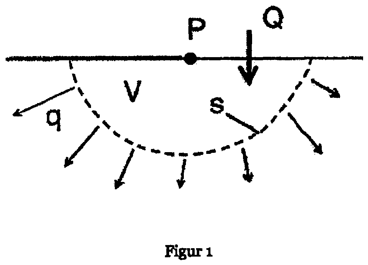

Generell wird die Wärmeableitungsfähigkeit $D$ ("Dissipation") der Bauteilschicht als Integral des Wärmeflusses $q$ [$W/m^2$] über die Oberfläche s [$m^2$] definiert (s. Fig. 1):

$$D = \oint_S qnds = \int_V div(q)dV = \int_V div(-\lambda grad(T))dV$$

n ist der Normalvektor zur Oberfläche $S$; V ist das betrachtete Volumen, $m^3$; $T$ ist die Temperatur, $K$; λ ist die Wärmeleitfähigkeit, $W/(mK)$.

Die lokale Wärmeableitungsfähigkeit kann aufgrund der Wärmeleitungsgleichung berechnet werden:

$$D = \int_V div(q) = \int_V \left( Q - c\rho \frac{\partial T}{\partial t} \right) dV$$

Q ist die Leistung der Wärmequelle im Volumen $V$, [W/m$^3$]; c ist die spezifische Wärmekapazität, [$J/(kgK)$]; ρ ist die Dichte, [$kg/m_3$]; t ist die Zeit, [s].

In einem bestimmten Punkt $P$ des Bauteils ($V \rightarrow o$) wird dann die lokale Wärmeableitungsfähigkeit $D^{loc}$ wie folgt definiert:

$$D^{loc} = div(q) = Q - c\rho \frac{\partial T}{\partial t}$$

Die lokale Wärmeableitungsfähigkeit hängt nicht nur von den Werkstoffeigenschaften (Wärmeleitung, Wärmekapazität, Dichte) und vom Wärmeeintrag ab. Sie wird auch von den Randbedingungen, wie z. B. die lokale Bauteilgeometrie, stark beeinflusst.

Wie die obigen Ausführungen zeigen, bestehen somit zumindest zwei mögliche unabhängige Wege zur Ermittlung der lokalen Wärmeableitungsfähigkeit eines Punktes einer Bauteilschicht darin,

$$(1) \ D^{loc} = div(q) = div\big(-\lambda grad(T)\big)$$

oder

$$(2) \ D^{loc} = Q - c\rho \frac{\partial T}{\partial t}$$

zur Ermittlung der lokalen Wärmeableitungsfähigkeit zu verwenden, wobei in beiden Fällen auch noch die lokale Bauteilgeometrie zu berücksichtigen ist.

Für die Zeiten einer reiner Abkühlung eines Punktes des Bauteilschicht, d.h. für die Zeiten, in denen die Wärmequelle in dem betrachteten Punkt nicht mehr wirkt (Leistung der Wärmequelle $Q = o$) ergibt der zweite aus den oben genannten Berechnungswegen eine noch einfachere Form der Darstellung:

$$D^{loc} = -c\rho \frac{\partial T}{\partial t}$$

Diese Darstellung der lokalen Wärmeableitungsfähigkeit ermöglicht eine einfache Ermittlung der Fähigkeit eines bestimmten Punktes zur Dissipation der Wärme in einem bestimmten Zeitpunkt. Je höher ist die Abkühlgeschwindigkeit in dem betrachteten Punkt in einem bestimmten Zeitpunkt, desto höher ist die lokale Wärmeableitungsfähigkeit. Generell ändert sich die Temperaturverteilung und die Abkühlgeschwindigkeit im Bauteil und dementsprechend die lokale Wärmeableitungsfähigkeit mit der Zeit. Daher ist es sinnvoll, die lokale Wärmeableitungsfähigkeit über eine bestimmte Zeit zu integrieren und den resultierenden Wert für die Charakterisierung der Wärmedissipation in einem bestimmten Punkt zu verwenden. Unter Annahme der Abwesenheit einer Wärmequelle, d.h. Wärmeeintrag = Null, ergibt sich ein folgender Wert:

$$D_{int}^{loc} = -\int_{t_1}^{t_2} c\rho \frac{\partial T}{\partial t} dt = -\int_{t_1}^{t_2} \frac{\partial H}{\partial t} dt = -\Delta H$$

$\Delta H$ ist die Änderung der Enthalpie, $J$, im Zeitintervall vom $t_1$ bis $t_2$.

Unter Annahme der temperaturunabhängigen Materialeigenschaften kann die lokale Wärmeableitungsfähigkeit durch die Änderung der Temperatur charakterisiert werden:

$$D_{int}^{loc} = -\Delta H = -c\rho\Delta T$$

Als ein nützlicher Wert zur Charakterisierung der lokalen Wärmeableitungsfähigkeit hat sich eine relative lokale Wärmeableitungsfähigkeit gezeigt, welche eine Relation zwischen $D_{int}^{loc}$ zum anfänglichen Temperaturgradienten darstellt:

$$D_{rel}^{loc} = \frac{D_{int}^{loc}}{\frac{\partial T(x,y,z,0)}{\partial z}}$$

Alle oben beschriebenen Darstellungen der lokalen Wärmeableitungsfähigkeit (als Enthalpie- oder Temperaturänderung) können im Rahmen einer Berechnung des Temperaturfeldes (thermische Berechnung) leicht ermittelt werden.

Indirekte physikalische Interpretation des Wertes der lokalen Wärmeableitungsfähigkeit: Die Wärme in einem additiven Herstellungsverfahren wird normalerweise hauptsächlich nach unten, von einer generierten Bauteilschicht in das Innere des Bauteils transportiert. Dabei deutet der Wert einer lokalen Wärmeableitungsfähigkeit indirekt auf die Menge der unter den dem bestimmten Punkt der Bauteilschicht befindlichen Masse des "kalten" konsolidierten Materials. Je mehr "kalte" Materialmasse sich unter einem bestimmten Punkt einer Bauteilschicht befindet, desto höher ist der Wert einer lokalen Wärmeableitungsfähigkeit.

Für eine direkte thermische Berechnung des Aufbauprozesses wäre eine sequentielle thermische Aktivierung aller Bauteilschichten/Segmente notwendig. Eine derartige Prozedur würde entsprechend zahlreiche Zeitschritte fordern und wäre mit einem hohen Berechnungsaufwand verbunden.

Gemäß einer besonderen Ausführungsform der vorliegenden Erfindung kann durch eine vereinfachte Ausführung der numerischen Simulation die Ermittlung der lokalen Wärmeableitungsfähigkeiten wesentlich schneller erfolgen. Dabei wird das ganze Bauteil ohne thermische Aktivierung einzelner Bauteilschichten/Segmente berechnet. Eine solche vereinfachte Simulation wird zur drastischen Reduzierung der erforderlichen Rechenzeiten führen (je größer das Bauteil ist, desto größer wird die Ersparnis der Rechenzeit).

Als Anfangsbedingung wird in dieser oder einer anderen Ausführungsform eine "künstliche" Temperaturverteilung mit in Aufbaurichtung (z-Richtung) aufsteigender Temperatur verwendet. Die anfänglichen Temperaturgradienten T in x- und y-Richtung werden als Null eingesetzt:

$$\begin{cases} \dfrac{\partial T(x,y,z,0)}{\partial z} > 0 \\ \dfrac{\partial T(x,y,z+\Delta z,0)}{\partial z} \geq \dfrac{\partial T(x,y,z,0)}{\partial z} \\ \dfrac{\partial T(x,y,z,0)}{\partial x} = \dfrac{\partial T(x,y,z,0)}{\partial y} = 0 \end{cases}$$

Eine solche Temperaturverteilung als Anfangsbedingung imitiert die Temperaturverteilung im realen Aufbauprozess. Für jede Bauteilschicht gewährleistet diese Verteilung, dass der Wärmefluss am Anfang der Berechnung ausschließlich nach unten erfolgt.

Eine besonders effektive Variante der oben genannten Anfangsbedingung repräsentiert einen konstanten Temperaturgradienten in Aufbaurichtung:

$$\begin{cases} \dfrac{\partial T(x,y,z,0)}{\partial z} = const > 0 \\ \\ \dfrac{\partial T(x,y,z,0)}{\partial x} = \dfrac{\partial T(x,y,z,0)}{\partial y} = 0 \end{cases}$$

Der konstante anfängliche Temperaturgradient in Aufbaurichtung, vordefiniert für jeden Punkt des Bauteils und damit auch für jede Bauteilschicht, weist den gleichen Nullwert der lokalen Wärmeableitungsfähigkeit auf:

$$D^{loc}(x, y, z, 0) = div\big(q(x,y,z,0)\big) = div(-\lambda grad(T(x,y,z,0)) =$$

$$= div\left(-\lambda\left(\frac{\partial T(x,y,z,0)}{\partial x} + \frac{\partial T(x,y,z,0)}{\partial y} + \frac{\partial T(x,y,z,0)}{\partial z}\right)\right) =$$

$$= div\big(-\lambda(const + \ 0 + 0)\big) = 0$$

Der Nullwert der lokalen Wärmeableitungsfähigkeit für jeden Punkt des Bauteils stellt eine bequeme Ausgangsbasis dar, um die nachfolgenden Änderungen der lokalen Wärmeableitungsfähigkeit in jedem Bauteilpunkt darzustellen.

Im allgemeinen wird - wie vorangehend anhand eines Ausführungsbeispiels beschrieben - die anfängliche Temperaturverteilung einfach angenommen. Für eine genauere Bestimmung der anfänglichen Temperaturverteilung können sowohl vereinfachte Lösungen, wie zum Beispiel eine schnelle 1- oder 2-dimensionale Berechnung des Temperaturfeldes beim Aufbauprozess als auch experimentelle Messungen verwendet werden.

Neben den Anfangsbedingungen können auch noch Randbedingungen definiert werden. Einige besonders vorteilhafte Randbedingungen sollen extra erwähnt werden:

1) Konstanter Wärmefluss über das gesamte Berechnungsgebiet

Bei dieser Variante der Randbedingungen ist der Wärmefluss am oberen Rand $q_{(oben;\ Englisch:\ top)}$ und am unteren Rand $q_{(unten;\ Englisch:\ bottom)}$ konstant und entspricht dem vorgegeben anfänglichen konstanten Temperaturgradienten grad $(T(x, y, z, o))$ im Bauteil:

$$q_{top} = q_{bottom} = -\lambda\ grad(T(x,y,z,0)) \quad = const$$

Die anderen Ränder des Bauteils werden thermisch isoliert, das heißt, dass der zeitliche Wärmefluss immer einen Nullwert hat.

Bei einem konstanten Temperaturgradienten hat die anfängliche lokale Wärmeableitungsfähigkeit einen Nullwert in jedem Punkt des Berechnungsgebiets (die Begründung ist oben angegeben).

Bei der gleichen oberen und unteren Fläche des Berechnungsgebiets gewährleistet diese Randbedingung einen Fluss der gleichen Energiemengen durch das gesamte Berechnungsgebiet. Nach einer bestimmten Zeit zum Erreichen eines stationären Zustandes des Temperaturfeldes, das heißt nach einer Umverteilung der Temperatur, bleibt die "neue" Temperatur in jedem Punkt stabil. So stabilisieren sich auch die Werte der lokalen Wärmeableitungsfähigkeit. Es ist im allgemeinen sinnvoll, bis zu diesem stationären oder nahezu stationären Zustand rechnen zu lassen.

Diese Variante der Randbedingungen ist für die Bestimmung der lokalen Wärmeableitungsfähigkeit in lokalen Bereichen des Bauteils besonders geeignet. Durch solche lokale Berechnungen werden zum Beispiel die Wärmestaus in der Umgebung eines Kanals oder eines Defekts, wie zum Beispiel eine Pore oder ein anderer unerwünschter Hohlraum, untersucht. Die lokalen Berechnungen dieser Art können eine Anwendung im Rahmen eines Überwachungssystems finden (siehe unten).

2) Volle thermische Isolation des gesamten Berechnungsgebiets
Eine volle thermische Isolation des gesamten Berechnungsgebiets stellt eine Variante der Randbedingungen dar, welche für die Ermittlung der lokalen Wärmeableitungsfähigkeit in den Bauteilen (im Rahmen der sogenannten globalen Berechnungen (thermische Berechnung des ganzen Bauteils)) sehr gut geeignet ist. Es kann dann eine Berechnung bis zu einem ersten Maximum der Temperaturänderung (und nicht bis zu einem stationären bzw. nahezu stationären Zustand) ausreichen.

Das Feld der lokalen Wärmeableitungsfähigkeit kann durch eine thermische Berechnung für ein bestimmtes Bauteil (vorab) numerisch ermittelt werden.

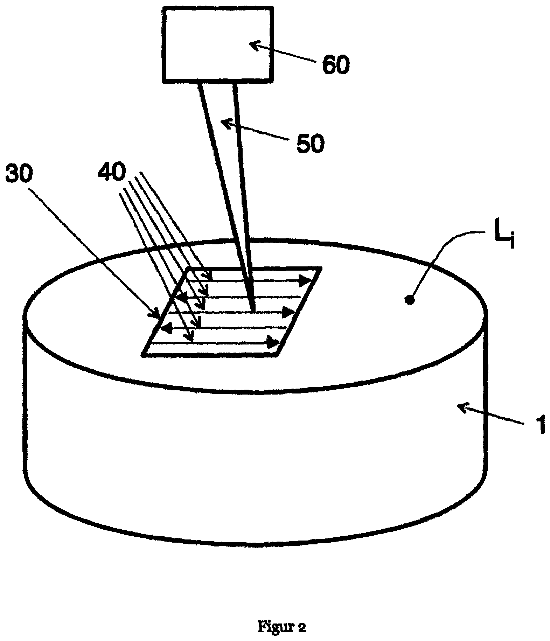

Die Figur 2 dient zur Erläuterung der Begriffe "Bauteil", "Bauteilschicht", "Segment" und "Scanvektor". Bei einem Verfahren zur additiven Fertigung eines dreidimensionalen Bauteils 1 wird das Bauteil schichtweise mit Hilfe einer oder mehrerer Energiequellen (als Teil einer Bestrahlungseinrichtung), im vorliegenden Beispiel mittels eines Lasers (nicht gezeigt), aufgebaut. Der Laser liefert einen Laserstrahl 50, der in diesem Beispiel von einem Scanner 6o gelenkt wird. Eine Bauteilschicht $L_i$ wird in Segmente unterteilt, von denen nur eines gezeigt und mit der Bezugszahl 30 versehen ist. Das Segment 30 beinhaltet in diesem Beispiel fünf Scanvektoren 40.

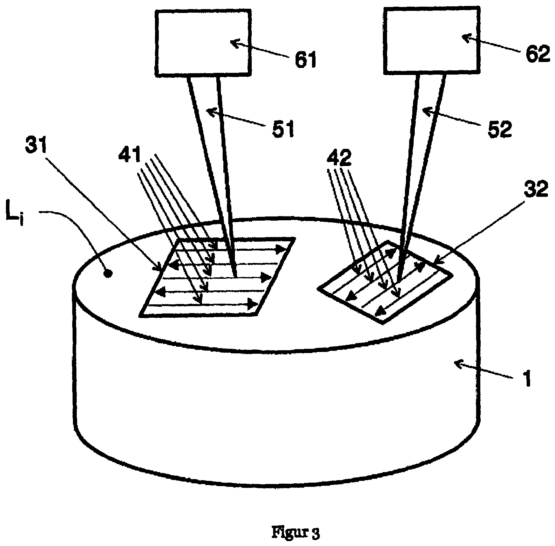

In der Figur 3 ist eine Anlage mit zwei Energiequellen, in diesem Beispiel jeweils ein Laser (nicht gezeigt), gezeigt. Jeder der beiden Laser liefert einen jeweiligen Laserstrahl 51 bzw. 52. In diesem Beispiel werden zwei verschiedene Segmente, nämlich die Segmente 31 und 32, mit den beiden Laserstrahlen 51 und 52 zeitgleich erzeugt. Die Scanvektoren 41 und 42 in den beiden Segmenten 31 und 32 sind genau wie in dem in der Figur 2 gezeigten Beispiel abwechselnd entgegengesetzt zueinander ausgerichtet.

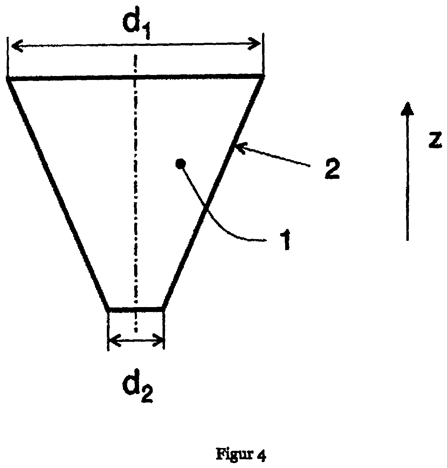

Die Figur 4 zeigt eine Seitenansicht eines achsensymmetrischen Bauteils 1 mit einer äußeren Oberfläche 2. Es handelt sich in diesem Beispiel um ein kegelstumpfförmiges Bauteil. Das Bauteil 1 weist einen oberen Durchmesser $d_1$ und einen unteren Durchmesser $d_2$ auf. Die Aufbaurichtung ist durch z gekennzeichnet.

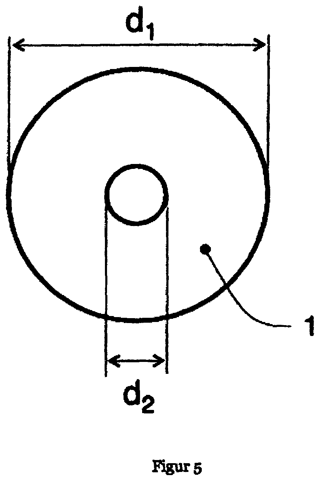

Figur 5 zeigt eine Draufsicht vom Bauteil 1 von Figur 4.

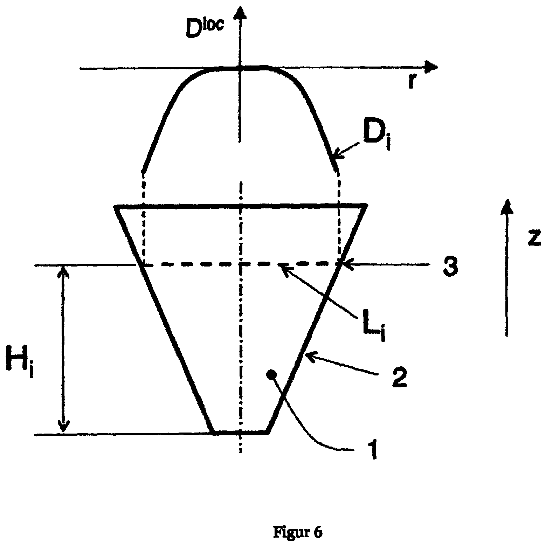

In der Figur 6 ist eine lokale Verteilung $D_i$ der Wärmeableitungsfähigkeit $D^{loc}$ in einer Bauteilschicht $L_i$ des Bauteils 1 der Figur 4 gezeigt. Die Bauteilschicht $L_i$ befindet sich auf einer Höhe H;. Da das Bauteil 1 symmetrisch ist, ist auch das Feld der Wärmeableitungsfähigkeit symmetrisch. Mit der Bezugszahl 3 ist der äußere Rand der Bauteilschicht $L_i$, der auf der äußeren Oberfläche 2 liegt, gekennzeichnet. Die Oberfläche 2 bildet eine Barriere zum freien Fluss der Wärme nach unten (gegen die Aufbaurichtung z). Je näher zum Rand 3 in der Bauteilschicht $L_i$, desto mehr staut sich die Wärme und desto niedriger ist die Wärmeableitungsfähigkeit. Im mittleren Bereich (innerhalb des Durchmessers $d_2$) ist der Wärmefluss nach unten nicht verhindert. Daher sind die Werte der lokalen Wärmeableitungsfähigkeit gleich Null.

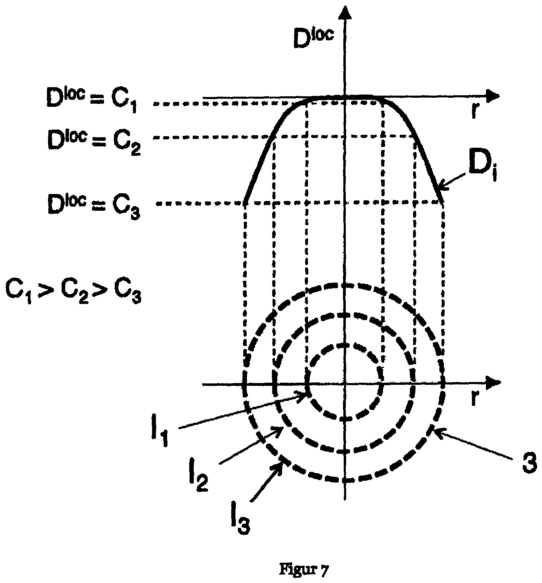

Figur 7 zeigt zugehörige Isolinien $I_1$, $I_2$ und $I_3$ der lokalen Wärmeableitungsfähigkeit $D_i$ in der Bauteilschicht $L_i$ von Figur 6 mit dem Rand 3. Die Werte $C_1$, $C_2$ und $C_3$ sind Konstanten. Aufgrund der Symmetrie des Bauteils 1 sind die Isolinien auch symmetrisch. Die Isolinie $I_3$ und der äußere Rand 3 der Bauteilschicht L; sind aufgrund der Symmetrie identisch.

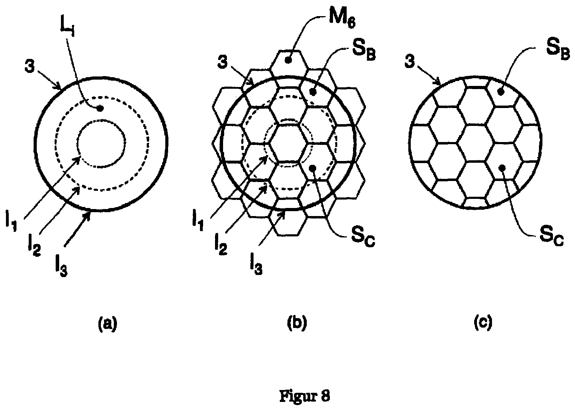

Figur 8 zeigt nun eine Segmentierung einer Bauteilschicht $L_i$ mit sechseckigen Segmenten. Genauer gesagt zeigt die Figur 8 (a) die Bauteilschicht $L_i$ mit Isolinien $I_1$, $I_2$ und $I_3$, zeigt die Figur 8 (b) ein Muster $M_6$ mit Segmenten mit gleicher sechseckiger Geometrie, wobei die Segmente $S_B$ Segmente sind, die den Rand 3 überschneiden ("Boundary-Segmente"), während die Segmente $S_C$ Segmente sind, die komplett im Inneren des Segments liegen ("Core-Segmente"), und zeigt die Figur 8 (c) die endgültige Segmentierung der Bauteilschicht.

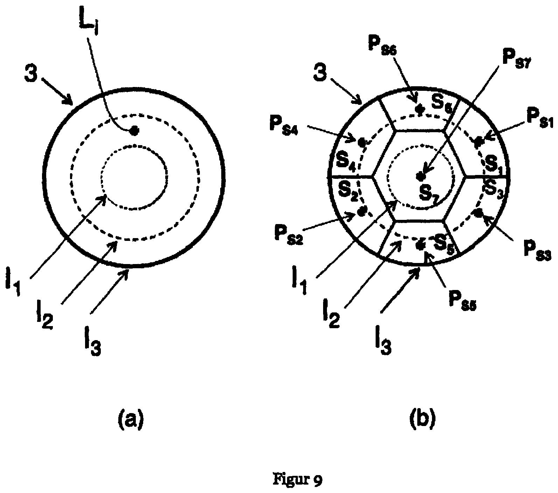

In der Figur 9 ist eine einfachere Segmentierung der Bauteilschicht $L_i$ gezeigt. Genauer gesagt zeigt die Figur 9 (a) die Bauteilschicht $L_i$ mit Isolinien $I_1$, $I_2$ und $I_3$ und zeigt die Figur 9 (b) Segmente $S_1$, $S_2$, $S_3$, $S_4$, $S_5$ und $S_6$ sowie deren Mittelpunkte $P_{S1}$, $P_{S2}$, $P_{S3}$, $P_{S4}$, $P_{S5}$ beziehungsweise $P_{S6}$.

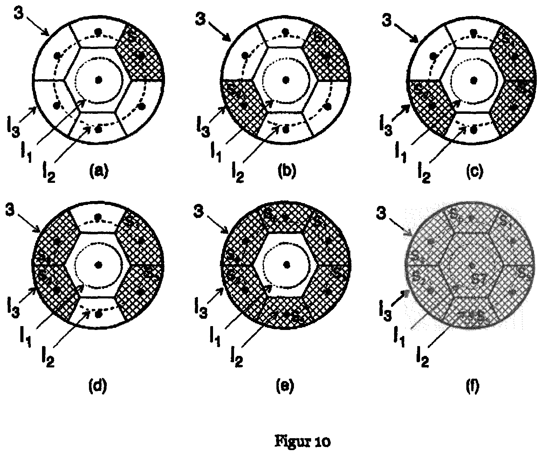

In der Figur 10 ist nun beispielhaft eine Reihenfolge zur Konsolidierung der Segmente $S_1$ bis So der Figur 9 dargestellt. Zunächst wird ein Bereich mit der niedrigsten Wärmeableitungsfähigkeit (mit den Mittelpunkten) zwischen den Isolinien $I_2$ und $I_3$ konsolidiert. S, wird als erstes Segment in diesem Bereich zufällig generiert (siehe Figur 10(a)).

Dann wird $S_2$ als zweites Segment generiert. Der Mittelpunkt von $S_2$ liegt in dem gleichen Bereich zwischen $I_2$ und $I_3$ wie der Mittelpunkt von S, und ist am weitesten vom Mittelpunkt von S, entfernt (siehe Figur 10 (b)).

Dann wird das Segment $S_3$ als drittes Segment gescannt. Es ist eines von zwei am gleichweitesten von $S_2$ im Bereich der niedrigsten Wärmeableitungsfähigkeit entfernten Segmente. Aus diesen zwei Segmenten wird $S_3$ zufällig ausgewählt (siehe Figur 10 (c)).

$S_4$ wird als viertes Segment generiert. Es ist ein am weitesten von $S_3$ im Bereich der niedrigsten Wärmeableitungsfähigkeit entferntes freies Segment (siehe Figur 10 (d)).

Zunächst wird $S_5$ als das am weitesten von $S_4$ im Bereich der niedrigsten Wärmeableitungsfähigkeit entfernte freie Segment generiert. Dann erfolgt ein Scannen vom letzten verbleibenden freien Segment im Bereich der niedrigsten Wärmeableitungsfähigkeit ($S_6$) (siehe Figur 10 (e)).

Als letztes wird das Segment $S_7$ konsolidiert. Es ist das einzige Segment im Bereich der höheren Wärmeableitungsfähigkeit (liegt komplett innerhalb von $I_1$) (siehe Figur 10 (f)).

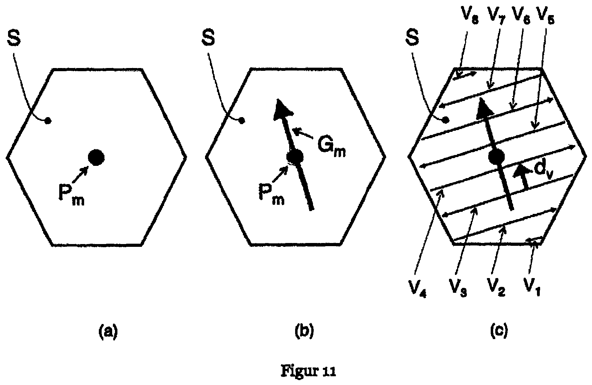

In den Figuren 11 (a) bis (c) wird beispielhaft eine Auslegung der Scanvektoren innerhalb eines Segments gezeigt. Ein Mittelpunkt $P_m$ in einem Segment S wird als "Massenzentrum" definiert (siehe Figur 11 (a)). Dann erfolgt eine Ausrichtung eines Gradienten $G_m$ der Wärmeableitungsfähigkeit im Mittelpunkt $P_m$ (siehe Figur 11 (b)). Schließlich werden in diesem Beispiel äquidistante Scanvektoren 5 quer zur Ausrichtung des Gradienten $G_m$ der Wärmeableitungsfähigkeit verlegt (siehe Figur 11 (c)). In diesem Beispiel wird die Reihenfolge der Scanvektoren $V_1$ bis $V_8$ durch einen Versatz in Richtung des Gradienten gebildet. Der Vektor $d_v$ bezeichnet den Versatz zwischen den zwei parallelen Scanvektoren $V_3$ und $V_4$.

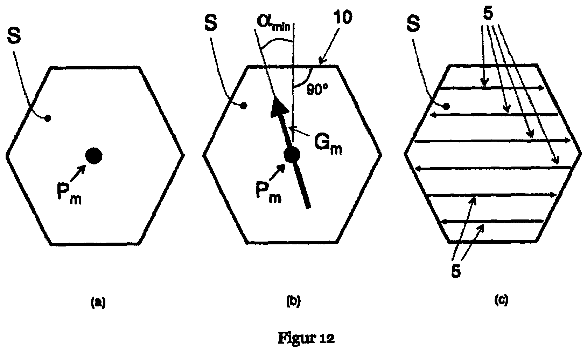

Figur 12 zeigt eine Auslegung der Scanvektoren innerhalb eines Segments gemäß einer weiteren besonderen Ausführungsform der vorliegenden Erfindung. Ein Mittelpunkt $P_m$ in einem Segment S wird als "Massenzentrum" definiert (siehe Figur 12 (a)). Dann erfolgt eine Ausrichtung eines Gradienten $G_m$ der Wärmeableitungsfähigkeit im Mittelpunkt $P_m$ (siehe Figur 12 (b)). Es wird eine Kante 10 des Segments S mit einem minimalen Winkel $\alpha_{min}$ zum Gradienten $G_m$ der Wärmeableitungsfähigkeit definiert (siehe Figur 12 (b)). Schließlich erfolgt eine Verlegung in diesem Beispiel äquidistanter Scanvektoren 5 parallel zur Ausrichtung der Kante mit dem minimalen Winkel zum Gradienten $G_m$.

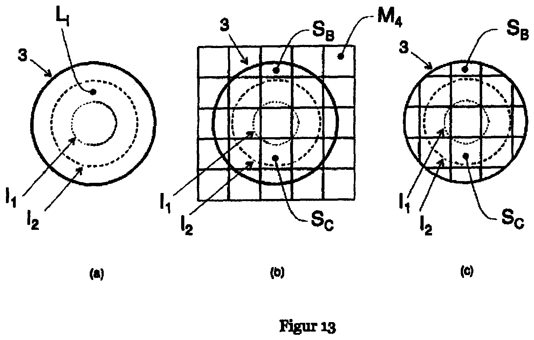

Figur 13 zeigt eine weitere Art der Segmentierung einer Bauteilschicht $L_i$ mit hauptsächlich viereckigen Segmenten. Genauer gesagt zeigt die Figur 13 (a) die Bauteilschicht $L_i$ mit Isolinien $I_1$, $I_2$ und $I_3$. In der Figur 13 (b) ist ein Muster $M_4$ mit Segmenten mit gleicher viereckiger Geometrie gezeigt. $S_B$ sind diejenigen Segmente, welche sich mit dem Rand 3 überschneiden ("Boundary-Segmente"). Sc sind diejenigen Segmente, welche komplett im Inneren der Bauteilschicht liegen ("Core-Segmente").

Schließlich zeigt die Figur 13 (c) die endgültige Segmentierung der Bauteilschicht.

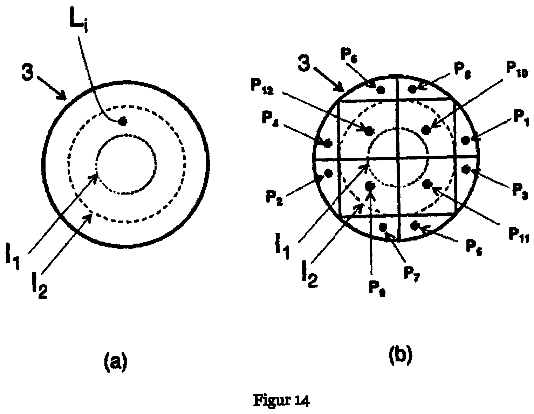

Aus der Figur 14 ergibt sich eine einfachere viereckige Segmentierung und eine Reihenfolge der Konsolidierung einzelner Segmente. Die Figur 14 (a) zeigt eine Bauteilschicht $L_i$ mit Isolinien $I_1$, $I_2$ und $I_3$.

Aus der Figur 14 (b) ergeben sich die Segmente und deren Mittelpunkte $P_1$ bis $P_{12}$. Die Nummern der Mittelpunkte geben die Reihenfolge der Konsolidierung nach demselben Schema wie in der Figur 10 an.

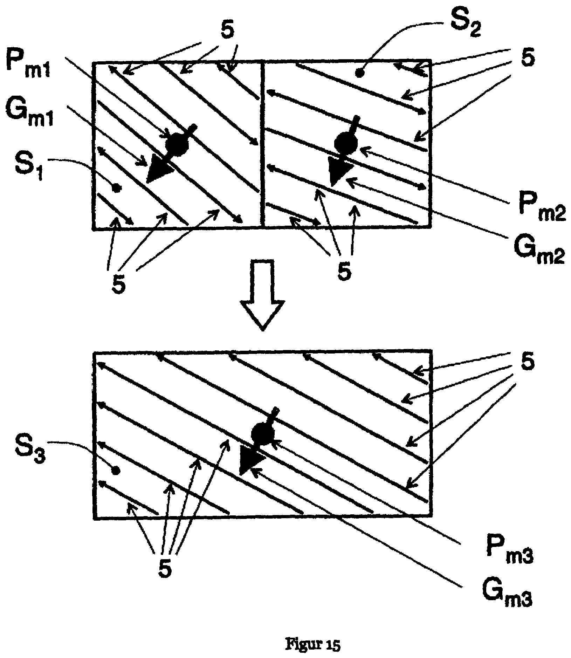

Die Anfangs- und Endbereiche der Scanvektoren sind bekanntlich weniger thermisch stabil, da in diesen Bereichen die Wärmequelle ein- bzw. ausgeschaltet wird. Häufig treten gerade in diesen Bereichen die Prozessdefekte auf, wie z.B. die Porosität. Daher ist es sinnvoll, die Anzahl der Anfangs- und Endbereiche zu reduzieren. Zu diesem Zweck wird im Rahmen des dargestellten Verfahrens die Vereinigung der Segmente eingesetzt. In der Figur 15 ist eine Vereinigung benachbarter Segmente $S_1$ und $S_2$ gezeigt. In der Figur 15 oben sind die beiden benachbarten Segmente S, und $S_2$ mit zugehörigen Mittelpunkten $P_{m1}$ und $P_{m2}$ sowie den Gradienten $G_{m1}$ und $G_{m2}$ der Wärmeableitungsfähigkeit sowie den Scanvektoren 5 gezeigt. In jedem dieser Segmente befinden sich jeweils 6 Scanvektoren (12 Scanvektoren in Summe), welche quer zur Richtung des Gradienten ausgelegt worden sind. In der Figur 15 unten ist gezeigt, wie ein neues Segment $S_3$ durch eine Vereinigung der Segmente $S_1$ und $S_2$ entsteht. Eine solche Vereinigung der Segmente ist zum Beispiel dann sinnvoll, wenn der Winkel zwischen den Gradienten $G_{m1}$ und $G_{m2}$ klein ist. Das neue Segment, dessen Fläche die Summe der Flächen der beiden alten Segmente darstellt, beinhaltet nun weniger Scanvektoren (8 Scanvektoren im neuen Segment gegenüber 12 Scanvektoren in alten Segmenten). Die Anzahl der Anfangs- und Endbereiche wird verringert.

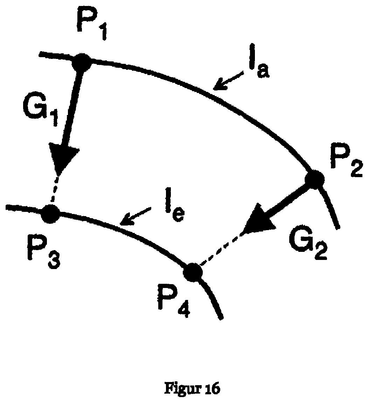

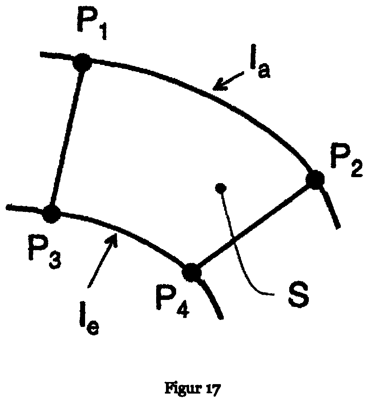

Figur 16 zeigt ein Beispiel für eine Auslegung der Grenzen eines Segments nach den Isolinien. $I_a$ und $I_b$ sind die Isolinien der lokalen Wärmeableitungsfähigkeit, $P_1$ und $P_2$ sind zwei Punkte auf der Isolinie $I_a$. $G_1$ und $G_2$ sind Gradienten der Wärmeableitungsfähigkeit in diesen Punkten. Die Punkte $P_3$ und $P_4$ ergeben sich durch Kreuzen der Isolinie $I_e$ mit den Richtungen der Gradienten $G_1$ und $G_2$. Das resultierende Segment S ist in der Figur 17 gezeigt.

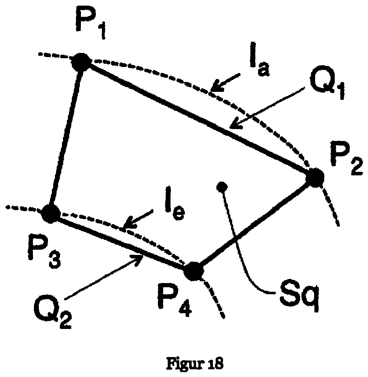

Das Segment S von Figur 17 wird noch gemäß der Figur 18 modifiziert. Ein neues Segment $S_q$ entsteht aus dem Segment S. Die Grenzen $Q_1$ und $Q_2$ stellen eine mögliche Art der Quasi-Isolinien $I_a$ und $I_e$ dar.

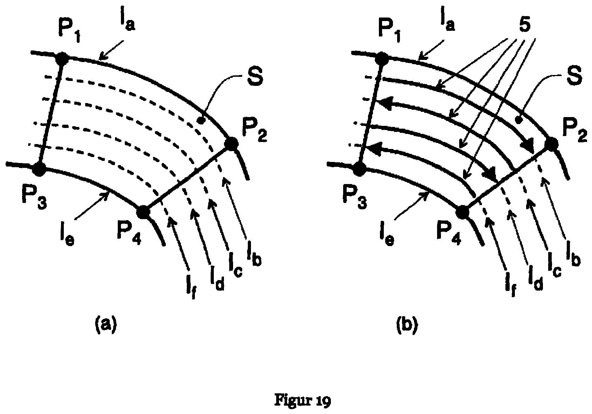

Zur Erzeugung gekrümmter Scanvektoren innerhalb eines Segments S können diese in Anlehnung an die Isolinien $I_b$, $I_c$, $I_d$ und Ir, die durch das Segment S verlaufen, ausgelegt werden (siehe Figur 19).

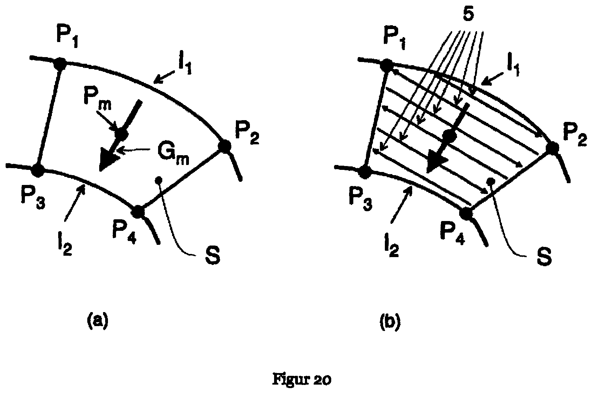

Ein Beispiel für eine Auslegung der Scanvektoren innerhalb eines Segments mit Grenzen entlang den Isolinien ist in der Figur 20 gezeigt. $P_m$ ist der Mittelpunkt in dem Segment S. Zudem ist dort die Ausrichtung des Gradienten $G_m$ der Wärmeableitungsfähigkeit im Mittelpunkt $P_m$ gezeigt (siehe Figur 20 (a)). In diesem Beispiel äquidistante Scanvektoren (Scanvektoren) 5 werden quer zur Ausrichtung des Gradienten $G_m$ verlegt (siehe Figur 20(b)).

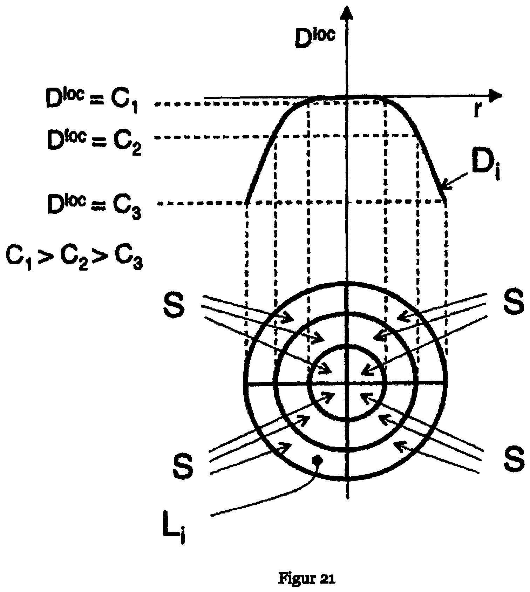

Figur 21 zeigt ein Beispiel einer symmetrischen Segmentierung der Bauteilschicht $L_i$ des Bauteils von Figur 4.

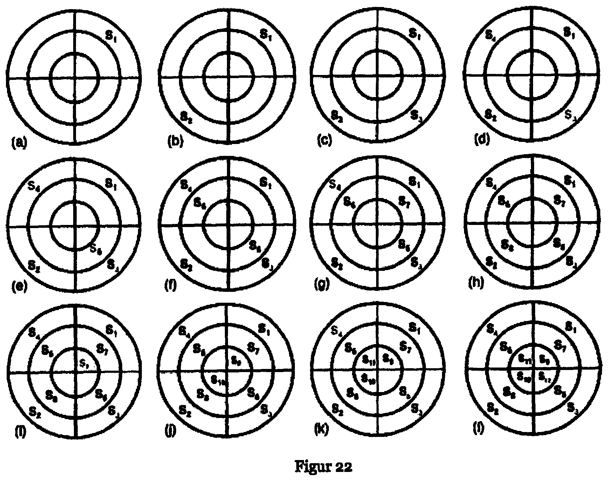

Aus der Figur 22 ergibt sich eine Reihenfolge der Konsolidierung einzelner Segmente der in der Figur 21 gezeigten Segmentierung analog zu Figur 10.

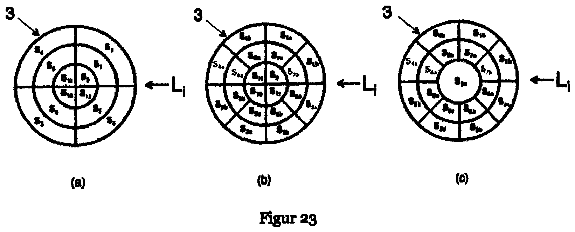

Die Figur 23 zeigt weitere Beispiele von Segmentierungen einer Bauteilschicht L; des Bauteils von Figur 4, einer Reihenfolge der Segmente und einer Vereinigung sowie Teilung der Segmente. Die Segmentierung weist vier kleinflächige Segmente $S_9$ bis $S_{12}$ in der Mitte der Bauteilschicht $L_i$ auf, wo der Wert der lokalen Wärmeableitungsfähigkeit vergleichbar ist, sowie relativ großflächige Segmente $S_1$ bis $S_9$ auf (siehe Figur 23 (a)). Die großflächigen Segmente S, bis $S_9$ in den Bereichen niedrigerer Wärmeableitungsfähigkeit werden geteilt. Zum Beispiel ergeben sich aus dem Segment $S_1$ Segmente $S_{1a}$ und $S_{1b}$ (siehe Figur 23 (b)). Die kleinflächigen Segmente $S_9$ bis $S_{12}$ werden miteinander vereint. Aus den Segmenten $S_9$, $S_{10}$, $S_{11}$, $S_{12}$ ergibt sich ein einzelnes Segment $S_{9a}$ (siehe Figur 23 (c)).

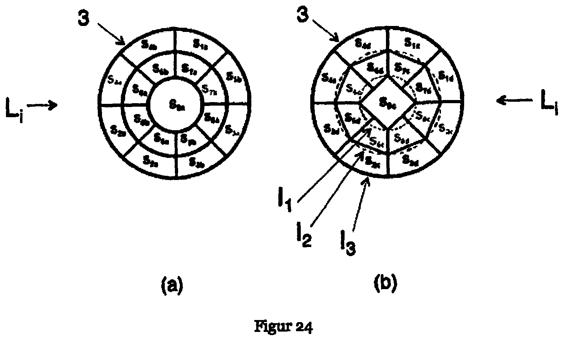

Ein Beispiel einer Linearisierung der Segmentgrenzen ist in der Figur 24 gezeigt. Genauer gesagt zeigt die Figur 24 (a) eine ursprüngliche Segmentierung wie in der Figur 23 (c). Eine neue Segmentierung (siehe Figur 24 (b)) ergibt sich durch eine Linearisierung der Grenzen der ursprünglichen Segmente. Dabei werden die Grenzen linearisiert, welche sich nicht an dem Rand 3 der Bauteilschicht L; befinden.

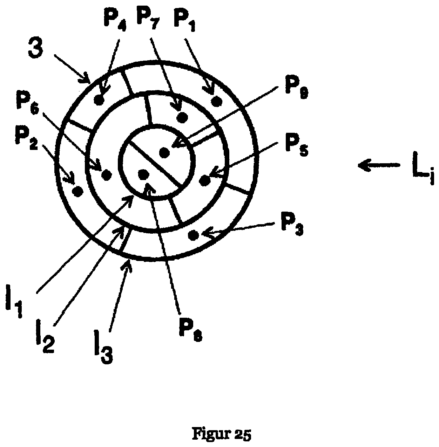

Ein Beispiel einer irregulären Segmentierung der Bauteilschicht L; ergibt sich aus der Figur 25. Die Nummerierung der Mittelpunkte $P_1$ bis $P_9$ entspricht der Reihenfolge der Segmente. Zunächst wird der Bereich mit der niedrigsten Wärmeableitungsfähigkeit konsolidiert (Segmente mit den Mittelpunkten $P_1$ bis $P_4$). Dabei wird das erste Segment mit dem Mittelpunkt P, zufällig ausgewählt. Das zweite Segment mit dem Mittelpunkt $P_2$ weist die maximale Entfernung von

$P_1$ auf. $P_3$ weist die maximale Entfernung von $P_2$ auf $P_4$ ist das letzte Segment in diesem Bereich (zwischen Isolinien $I_2$ und $I_3$). Danach werden die Segmente im Bereich zwischen den Isolinien $I_1$ und $I_2$ konsolidiert. Als erstes wird das Segment mit dem Mittelpunkt $P_5$ als das maximal vom Mittelpunkt $P_4$ entfernte Segment gescannt. Dann wird das Segment mit dem Mittelpunkt $P_6$ als das maximal entfernte Segment von $P_5$ gescannt. Danach wird das Segment mit dem Mittelpunkt $P_7$ als das letzte in diesem Bereich gescannt.

Im Anschluss daran werden die Segmente im Bereich innerhalb der Isolinie $I_1$ gescannt. Als erstes wird das Segment mit dem Mittelpunkt $P_3$ als das maximal vom Mittelpunkt $P_7$ entfernte Segment gescannt. Dann wird das Segment mit dem Mittelpunkt $P_9$ als das letzte in diesen Bereich gescannt.

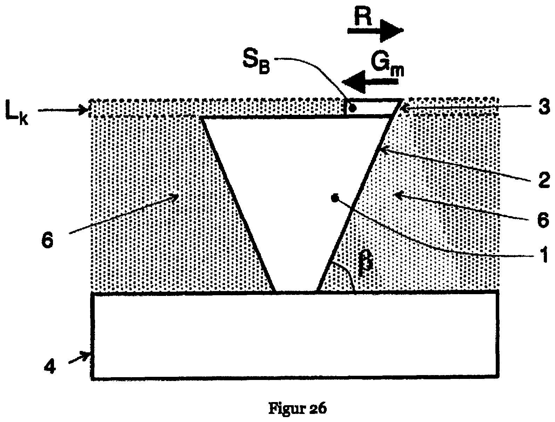

Ein spezieller Fall des Scannens einzelner Segmente gemäß einer besonderen Ausführungsform der vorliegenden Erfindung ist in der Figur 26 gezeigt. Genauer gesagt handelt es sich um einen speziellen Fall des Scannens einzelner Segmente in Richtung entgegen der Ausrichtung des Gradienten $G_m$ der Wärmeableitungsfähigkeit. $S_B$ ist ein Randsegment, gescannt über einen Überhang gebildet von der Oberfläche 2. Dabei wird der Rand 3 der Bauteilschicht $L_k$ über Pulver 6, aber nicht über bereits konsolidiertes Material gebaut. Da die Wärmeableitungsfähigkeit in Richtung zur Mitte des Bauteils 1 steigt, ist der Gradient $G_m$ in diesem Segment zur Mitte der Bauteilschicht $L_k$ ausgerichtet. Die Reihenfolge des Scannens der einzelnen Scanvektoren in diesem Segment wird in einer entgegengesetzten Richtung R gebildet. Durch diese Scanausrichtung erfolgt eine Konsolidierung des Randes 3 erst am Ende des Scannens des gesamten Segments. Bei einer umgekehrten Scanrichtung entsteht die Gefahr, dass das geschmolzene Pulver im Randbereich entweder nicht oder sehr schlecht mit der vorherigen festen Schicht angebunden wird. Eine schlechte Anbindung ist insbesondere bei niedrigeren Winkeln β zu erwarten. Aufgrund der schlechten Anbindung an das feste Material der vorherigen Bauteilschicht wird der Wärmefluss in das Innere des Bauteils verhindert. Dies wird einen Wärmestau und eine mögliche starke Deformation des Segments am Rand 3 beziehungsweise im Randbereich mit sich führen.

Der Vollständigkeit halber wird hinsichtlich der Figur 26 noch darauf hingewiesen, dass darin auch eine Bauplatte 4 gezeigt ist.

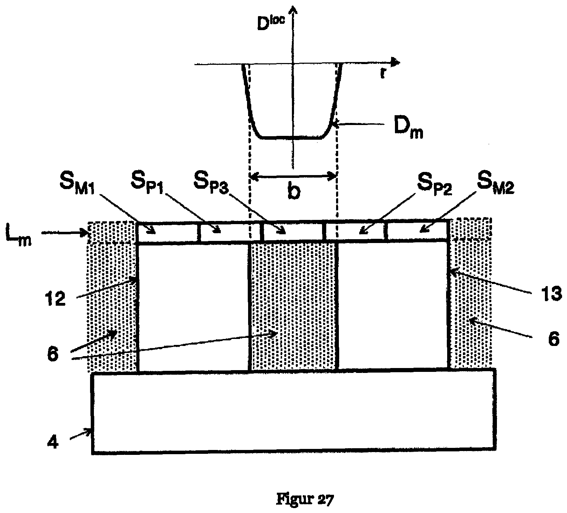

Figur 27 zeigt einen speziellen Fall der Reihenfolge des Scannens einzelner Segmente in Richtung der Senkung der lokalen Wärmeableitungsfähigkeit. Es kann sinnvoll sein, die Segmente, die voll oder teilweise über Pulver konsolidiert werden (wie die Segmente $S_{P1}$, $S_{P2}$ und $S_{P3}$ ("P" bezeichnet "über Pulver")) in Richtung sinkender Wärmeableitungsfähigkeit zu konsolidieren. Die Reihenfolge der Segmente in dem dargestellten Beispiel: zunächst $S_{P1}$ und $S_{P2}$ und erst dann $S_{P3}$. Bei einer umgekehrten Reihenfolge (zum Beispiel $S_{P3}$ und dann $S_{P1}$ oder $S_{P2}$) besteht die Gefahr einer instabilen Schichtbildung, da das Segment $S_{P3}$ als eine "feste Insel" über Pulver gebaut wird und an kein "Festland" gebunden wird. Die Wärme kann dabei nicht in das Innere des Bauteils weitertransportiert werden. Eine solche "Insel" kann durch eine ungleichmäßige Abkühlung sehr stark deformiert werden (Verzug). Aus den gleichen Gründen kann es auch sinnvoll sein, das Scannen einzelner Segmente, wie zum Beispiel $S_{P1}$, $S_{P2}$ und $S_{P3}$, in der Richtung entgegengesetzt zum Gradienten durchzuführen, wie dies in der Figur 26 gezeigt ist. Die "normalen" Segmente mit dem festen bereits konsolidierten Material der vorherigen Bauteilschicht auf der unteren Seite, wie die Segmente $S_{M1}$ und $S_{M2}$ ("M" bezeichnet "überfestes Material") werden auch "normal" gescannt, das heißt in Richtung des Gradienten der Wärmeleitfähigkeit. Die Reihenfolge dieser Segmente sollte vorzugsweise auch "normal" bleiben, das heißt zunächst werden sie in den Bereichen mit einer niedrigeren Wärmeableitungsfähigkeit und dann in den Bereichen mit einer höheren Wärmeableitungsfähigkeit konsolidiert.

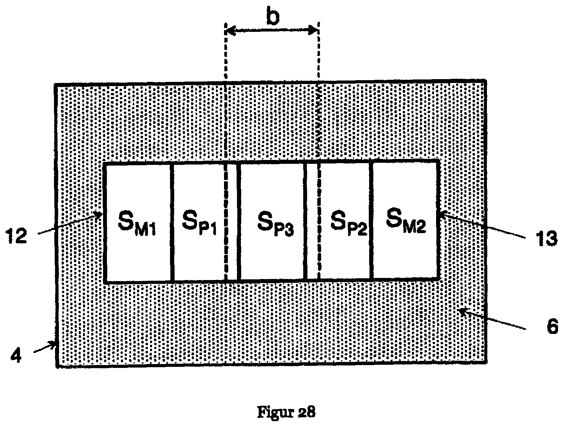

Figur 28 zeigt eine Sicht von oben für das Beispiel von Figur 27.

Die vorangehend beschriebenen Abfolgen können selbstverständlich abgeändert, reduziert oder ergänzt werden, ohne vom Umfang der beigefügten Ansprüche abzuweichen.

Bezugszeichenliste

| | |
|---|---|
| 1 | Bauteil |
| 2 | Oberfläche |
| 3 | äußerer Rand |
| 4 | Bauplatte |
| 5 | Scanvektoren |
| 6 | Pulver |
| 10 | Kante |
| 30,31,32 | Segmente |
| 40,41,42 | Scanvektoren |
| 50, 51, 52 | Laserstrahlen |
| 60 | Scanner |

| | |
|---|---|
| $\alpha_{min}$ | Winkel |
| $C_1, C_2, C_3$ | Konstanten |
| $D_i$ | lokale Verteilung der Wärmeableitungsfähigkeit |
| $d_1$ | oberer Durchmesser |
| $d_2$ | unterer Durchmesser |
| $d_v$ | Versatz |
| $G_1, G_2$ | Gradienten |
| $G_m, G_{m1}, G_{m2}, G_{m3}$ | Gradienten |
| $I_1, I_2, I_3$ | Isolinien der Wärmeableitungsfähigkeit |
| $I_a, I_b, ... I_f$ | Isolinien |
| $L_i, L_k$ | Bauteilschicht |
| M | Material |
| $M_4, M_6$ | Muster |
| $P_1, P_2, ... P_{12}$ | Mittelpunkte |
| $P_m, P_{m1}, P_{m2}, P_{m3}$ | Mittelpunkte |
| $P_{s1}, P_{s2}, ... P_{s6}$ | Mittelpunkte |
| $Q_1, Q_2$ | Grenzen |
| R | Richtung |
| $S_1, S_2, ... S_{12}$ | Segmente |
| $S_{1a}, S_{1b}$ | Segmente |
| $S_{9a}$ | Segmente |
| $S_b, S_c, S_q$ | Segmente |
| $S_{M1}, S_{M2}$ | Segmente |
| $S_{P1}, S_{P2}, S_{P3}$ | Segmente |
| $V_1, V_2,...; V_8$ | Scanvektoren |

## Patentansprüche

1. Verfahren zur additiven Fertigung eines dreidimensionalen Bauteils (1) aus mehreren Bauteilschichten ($L_i$, $L_k$) durch mehrfaches inkrementelles, insbesondere schichtweises, Hinzufügen von pulver-, draht- oder bandförmigem, insbesondere metallischem, Bauteilausgangsmaterial und, insbesondere inkrementelles, formgebendes Konsolidieren des Bauteilausgangsmaterials durch jeweils selektives Schmelzen und/oder Sintern mittels einer durch mindestens eine Energiequelle, insbesondere lokal, gemäß einer Scanstrategie eingebrachten Wärmemenge, wobei das Verfahren eine Aufteilung jeder Bauteilschicht ($L_i$, $L_k$) in Segmente ($S_1$, $S_2$, $S_3$, ..., $S_{12}$) umfasst, **dadurch gekennzeichnet, dass** die Auslegung der Scanvektoren innerhalb eines Segmentes und die zeitliche Reihenfolge der Scanvektoren innerhalb eines Segmentes bei Erzeugung von jeweiligen segmentierten Bauteilschichten ($L_i$, $L_k$) auf Basis einer, insbesondere simulationsbasiert, ermittelten lokalen Wärmeableitungsfähigkeit oder anhand einer Funktion derselben in einer jeweiligen Bauteilschicht erfolgt, wobei in jedem der Segmente die Richtung des Gradienten (G1, G2, $G_m$, $G_{m1}$, $G_{m2}$, $G_{m3}$) der lokalen Wärmeableitungsfähigkeit, vorzugsweise im Mittelpunkt ($P_m$, $P_{m1}$, $P_{m2}$, $P_{m3}$ und $P_{s1}$, $P_{s2}$, ..., $P_{s6}$) des jeweiligen Segmentes, als eine Referenzrichtung des Gradienten der lokalen Wärmeableitungsfähigkeit eingesetzt wird, und wobei die Richtung der Scanvektoren in einem jeweiligen Segment im Wesentlichen quer zur Referenzrichtung des Gradienten der lokalen Wärmeableitungsfähigkeit ausgelegt wird, und wobei die Reihenfolge des Scannens der einzelnen Scanvektoren innerhalb eines Segmentes basierend auf der Referenzrichtung des Gradienten der lokalen Wärmeableitungsfähigkeit gewählt wird, wobei der Versatz zwischen zwei nacheinander folgenden Scanvektoren innerhalb eines Segmentes entgegen der Referenzrichtung des Gradienten der lokalen Wärmeableitungsfähigkeit erfolgt.

2. Verfahren nach dem Anspruch 1, wobei eine jeweilige Bauteilschicht ($L_i$, $L_k$) in mehreckige Segmente, insbesondere rechteckige oder sechseckige Segmente, segmentiert wird.

3. Verfahren nach einem der Ansprüche 1 oder 2, wobei einer der Werte der lokalen Wärmeableitungsfähigkeit innerhalb des jeweiligen Segmentes, insbesondere ein durchschnittlicher Wert der lokalen Wärmeableitungsfähigkeit, in jedem der Segmente als ein Referenzwert der lokalen Wärmeableitungsfähigkeit eingesetzt wird, und wobei vorzugsweise die Reihenfolge der Erzeugung einzelner Segmente basierend auf den Referenzwerten der lokalen Wärmeableitungsfähigkeit gewählt wird.

4. Verfahren nach Anspruch 3, wobei die Segmente ausgehend von Segmenten mit einem niedrigen Referenzwert der lokalen Wärmeableitungsfähigkeit zu Segmenten mit einem höheren Referenzwert der lokalen Wärmeableitungsfähigkeit hin erzeugt werden.

5. Verfahren nach Anspruch 3, wobei die Segmente einer Bauteilschicht gemäß dem Referenzwert der lokalen Wärmeableitungsfähigkeit in den jeweiligen Segmenten in mindestens zwei Gruppen aufgeteilt werden, und wobei vorzugsweise eine jeweilige Gruppe der Segmente aus solchen Segmenten gebildet wird, deren Referenzwert der lokalen Wärmeableitungsfähigkeit innerhalb eines bestimmten Intervalls zwischen zwei konstanten Grenzwerten der lokalen Wärmeableitungsfähigkeit liegen.

6. Verfahren nach einem der vorgehenden Ansprüche, wobei die Bauteilschicht mit Hilfe von mehreren, in unterschiedlichen Orten der Bauteilschicht zeitgleich wirkenden Energiequellen, insbesondere mit mehreren Lasern oder mit einer örtlich aufgeteilten Lichtquelle, erzeugt wird, und wobei vorzugsweise mindestens ein Paar nacheinander folgender Segmente aus der ermittelten Reihenfolge der Erzeugung der Segmente mit Hilfe von mindestens zwei unterschiedlichen Energiequellen zeitgleich erzeugt wird.

7. Verfahren nach einem der vorhergehenden Ansprüche, wobei in einem jeweiligen Segment eine Kante dieses Segmentes ermittelt wird, deren Normalvektor die kleinste Abweichung zur Referenzrichtung des Gradienten der lokalen Wärmeableitungsfähigkeit als die Normalvektoren der anderen Kanten dieses Segmentes aufweist, und parallel zu dieser Kante die Scanvektoren, vorzugsweise äquidistant, ausgelegt werden.

8. Verfahren nach einem der vorhergehenden Ansprüche, wobei der zeitliche Abstand zwischen aufeinanderfolgenden Scanvektoren sukzessiv erhöht wird.

9. Anlage zur additiven Fertigung eines dreidimensionalen Bauteils aus mehreren Bauteilschichten durch mehrfaches inkrementelles, insbesondere schichtweises, Hinzufügen von pulver-, draht- oder bandförmigem, insbesondere metallischem, Bauteilausgangsmaterial und, insbesondere inkrementelles, formgebendes Konsolidieren des Bauteilausgangsmaterials durch jeweils selektives Schmelzen und/oder Sintern mittels einer durch mindestens eine Energiequelle, insbesondere lokal, gemäß einer Scanstrategie eingebrachten Wärmemenge, umfassend

- ein Bauraumgehäuse mit einer Bauplattform (4) zur Abstützung eines oder mehrerer pulverbett-basiert additiv zu fertigenden Bauteils/Bauteile (1),
- eine Schichtenpräparierungseinrichtung zur Präparierung jeweiliger Pulverschichten auf der Bauplattform,
- eine Bestrahlungseinrichtung zur Bestrahlung der jeweils zuletzt präparierten Pulverschicht auf der Bauplattform und
- eine Steuereinrichtung zur Steuerung der Bestrahlungseinrichtung gemäß einem Verfahren nach einem der Ansprüche 1 bis 8.

10. Ein oder mehrere computerlesbare(s) Medium/Medien, das/die durch Computer ausführbare Befehle umfasst/umfassen, die bewirken, dass die Anlage des Anspruchs 9 das Verfahren nach einem der Ansprüche 1 bis 8 ausführt.

## Claims

1. A method for additively manufacturing a three-dimensional component (1) from multiple component layers ($L_i$, $L_k$) by repeated incremental addition, in particular in layers, of a component starting material, in particular a metallic component starting material, in the form of a powder, wire or strip, and, in particular incremental, shaping consolidation of the component starting material by respectively selective melting and/or sintering by means of an amount of heat introduced by at least one energy source, in particular locally, according to a scanning strategy, wherein the method comprises dividing each component layer ($L_i$, $L_k$) into segments ($S_1$, $S_2$, $S_3$,..., $S_{12}$), **characterized in that** the layout of the scanning vectors within a segment and the time sequence of the scanning vectors within a segment in the creation of respective segmented component layers ($L_i$, $L_k$) takes place on the basis of a determined local heat dissipating capability, in particular determined in a simulation-based manner, or on the basis of a function of the same in a respective component layer, wherein in each of the segments the direction of the gradient (G1, G2, $G_m$, $G_{m1}$, $G_{m2}$, $G_{m3}$) of the local heat dissipating capability, preferably at the centre point ($P_m$, $P_{m1}$, $P_{m2}$, $P_{m3}$ and $P_{s1}$, $P_{s2}$, ..., $P_{s6}$) of the respective segment, is used as a reference direction of the gradient of the local heat dissipating capability, and wherein the direction of the scan vectors in a respective segment is laid out essentially transverse to the reference direction of the gradient of the local heat dissipating capability, and wherein the sequence of the scanning of the individual scanning vectors within a segment is chosen on the basis of the reference direction of the gradient of the local heat dissipating capability, wherein the offset between two successive scanning vectors within a segment takes place in a reference direction of the gradient of the local heat dissipating capability.

2. The method as claimed in claim 1, wherein a respective component layer ($L_i$, $L_k$) is segmented into polygonal segments, in particular rectangular or hexagonal segments.

3. The method as claimed in one of claims 1 or 2, wherein one of the values of the local heat dissipating capability within the respective segment, in particular an average value of the local heat dissipating capability, in each of the segments is used as a reference value of the local heat dissipating capability, and wherein preferably the sequence of the creation of individual segments is chosen on the basis of the reference values of the local heat dissipating capability.

4. The method as claimed in claim 3, wherein the segments are created starting from segments with a low reference value of the local heat dissipating capability progressively to segments with a higher reference value of the local heat dissipating capability.

5. The method as claimed in claim 3, wherein the segments of a component layer are divided into at least two groups according to the reference value of the local heat dissipating capability in the respective segments, and wherein preferably a respective group of segments is formed from those segments of which the reference value of the local heat dissipating capability lies within a specific interval between two constant limit values of the local heat dissipating capability.

6. The method as claimed in one of the preceding claims, wherein the component layer is created with the aid of a number of energy sources acting at the same time at different locations of the component layer, in particular with a number of lasers or with a light source split between different locations, and wherein preferably at least one pair of successive segments is created at the same time from the determined sequence of the creation of the segments with the aid of at least two different energy sources.

7. The method as claimed in one of the preceding claims, wherein in a respective segment an edge of this segment of which the normal vector has the smallest deviation from the reference direction of the gradient of the local heat dissipating capability is determined as the normal vectors of the other edges of this segment, and the scanning vectors are laid out parallel to this edge, preferably equidistantly.

8. The method as claimed in one of the preceding claims, wherein the time interval between successive scanning vectors is successively increased.

9. A system for additively manufacturing a three-dimensional component from multiple component layers by repeated incremental addition, in particular in layers, of a component starting material, in particular a metallic component starting material, in the form of a powder, wire or strip, and, in particular incremental, shaping consolidation of the component starting material by respectively selective melting and/or sintering by means of an amount of heat introduced by at least one energy source, in particular locally, according to a scanning strategy, comprising

- a building space housing with a building platform (4) for supporting one or more component/components (1) to be additively manufactured in a powder-bed-based manner,
- a layer preparation device for preparing respective powder layers on the building platform,
- an irradiating device for irradiating the respectively last-prepared powder layer on the building platform and
- a control device for controlling the irradiating device according to a method as claimed in one of claims 1 to 8.

10. One or more computer-readable medium/media which comprise(s) commands which can be executed by computer and which cause the system of claim 9 to carry out the method as claimed in one of claims 1 to 8.

**Revendications**

1. Procédé de fabrication additive d'un composant tridimensionnel (1) à partir de plusieurs couches de composant ($L_i$, $L_k$) par apports incrémentiels multiples, en particulier par couches, d'une matière de départ de composant, en particulier métallique, sous forme de poudre, de fil métallique ou de bande, et par consolidation de mise en forme, en particulier incrémentielle, de la matière de départ de composant, respectivement par fusion sélective et/ou frittage sélectif au moyen d'une quantité de chaleur introduite par au moins une source d'énergie, en particulier localement selon une stratégie de balayage, dans lequel le procédé comprend une répartition de chaque couche de composant ($L_i$, $L_k$) en segments ($S_i$, $S_2$, $S_3$, ..., $S_{22}$),

**caractérisé en ce que** la configuration des vecteurs de balayage à l'intérieur d'un segment et l'ordre chronologique des vecteurs de balayage à l'intérieur d'un segment, lors de la génération de couches de composant ($L_i$, $L_k$) respectivement segmentées, est effectuée dans une couche de composants respective sur la base d'une capacité de dissipation thermique locale établie, en particulier sur la base d'une simulation, ou à l'aide d'une fonction de celle-ci, dans lequel, dans chacun des segments, la direction du gradient ($G1$, $G2$, $G_{m1}$ $G_{m1}$, $G_{m2}$, $G_{m3}$) de la capacité de dissipation thermique locale, est utilisée, de préférence au centre ($P_m$, $P_{m1}$, $P_{m2}$, $P_{m3}$ et $P_{s1}$ $P_{s2}$, ... $P_{s6}$) du segment respectif, comme une direction de référence du gradient de la capacité de dissipation thermique locale, et dans lequel la direction des vecteurs de balayage dans un segment respectif est configurée de manière substantiellement transversale à la direction de référence du gradient de la capacité de dissipation thermique locale, et dans lequel l'ordre du balayage des vecteurs de balayage individuels à l'intérieur d'un segment est sélectionné sur la base de la direction de référence du gradient de la capacité de dissipation thermique locale, dans lequel le décalage entre deux vecteurs de balayage consécutifs à l'intérieur d'un segment est effectué à l'opposé de la direction de référence du gradient de la capacité de dissipation thermique locale.

2. Procédé selon la revendication 1, dans lequel une couche de composant ($L_i$, $L_k$) respective est segmentée en segments polygonaux, en particulier en segments rectangulaires ou hexagonaux.

3. Procédé selon l'une quelconque des revendications 1 ou 2, dans lequel l'une des valeurs de la capacité de dissipation thermique locale à l'intérieur du segment respectif, en particulier une valeur moyenne de la capacité de dissipation thermique locale, est utilisée dans chacun des segments comme une valeur de référence de la capacité de dissipation thermique locale, et dans lequel de préférence l'ordre de la génération de segments individuels est sélectionné sur la base des valeurs de référence de la capacité de dissipation thermique locale.

4. Procédé selon la revendication 3, dans lequel les segments sont générés en allant des segments ayant une valeur de référence inférieure de la capacité de dissipation thermique locale aux segments ayant une valeur de référence supérieure de la capacité de dissipation thermique locale.

5. Procédé selon la revendication 3, dans lequel les segments d'une couche de composant sont répartis selon la valeur de référence de la capacité de dissipation thermique locale dans les segments respectifs sur au moins deux groupes, et dans lequel de préférence un groupe respectif des segments est formé à partir de segments dont la valeur de référence de la capacité de dissipation thermique locale est comprise dans un intervalle déterminé entre deux valeurs limites constantes de la capacité de dissipation thermique locale.

6. Procédé selon l'une quelconque des revendications précédentes, dans lequel la couche de composant est générée à l'aide de plusieurs sources d'énergie agissant en même temps à différents endroits de la couche de composant, en particulier par plusieurs lasers ou par une source de lumière répartie localement, et dans lequel de préférence au moins une paire de segments consécutifs de l'ordre établi de la génération des segments est générée en même temps à l'aide d'au moins deux sources d'énergie différentes.

7. Procédé selon l'une quelconque des revendications précédentes, dans lequel, dans un segment respectif, une arête de ce segment est établie dont le vecteur normal présente le plus petit écart par rapport à la direction de référence du gradient de la capacité de dissipation thermique locale par rapport aux vecteurs normaux des autres arêtes de ce segment, et les vecteurs de balayage sont configurés en parallèle à cette arête, de préférence de manière équidistante.

8. Procédé selon l'une quelconque des revendications précédentes, dans lequel l'intervalle de temps entre des vecteurs de balayage consécutifs augmente successivement.

9. Installation de fabrication additive d'un composant tridimensionnel à partir de plusieurs couches de composant ($L_i$, $L_k$) par apports incrémentiels multiples, en particulier par couches, d'une matière de départ de composant, en particulier métallique, sous forme de poudre, de fil métallique ou de bande, et par consolidation de mise en forme, en particulier incrémentielle, de la matière de départ de composant, respectivement par fusion sélective et/ou frittage sélectif au moyen d'une quantité de chaleur introduite par au moins une source d'énergie, en particulier localement selon une stratégie de balayage, comprenant

- un boîtier d'espace de construction pourvu d'une plateforme de construction (4) pour soutenir un ou plusieurs composants (1) à fabriquer de manière additive sur la base d'un lit de poudre,
- un dispositif de préparation de couche pour préparer des couches de poudre respectives sur la plateforme de construction,
- un dispositif d'irradiation pour irradier la couche de poudre respectivement préparée en dernier sur la plateforme de construction, et
- un dispositif de commande pour commander le dispositif d'irradiation selon un procédé selon l'une quelconque des revendications 1 à 8.

10. Un ou plusieurs supports lisibles par ordinateur qui comprennent des instructions exécutables par ordinateur et qui font que l'installation selon la revendication 9 exécute le procédé selon l'une quelconque des revendications 1 à 8.

Figur 1

Figur 2

Figur 3

Figur 4

Figur 5

Figur 6

Figur 7

(a)　　　　　　　(b)　　　　　　　(c)

Figur 8

(a)      (b)

Figur 9

Figur 10

(a)　　　　　　　(b)　　　　　　　(c)

Figur 11

(a)                              (b)                              (c)

Figur 12

EP 3 606 756 B1

(a)  (b)  (c)

Figur 13

32

(a)

(b)

Figur 14

Figur 15

Figur 16

Figur 17

Figur 18

(a)                    (b)

Figur 19

(a)

(b)

Figur 20

$D^{loc}$

$D^{loc} = C_1$

$D^{loc} = C_2$

$D_i$

$D^{loc} = C_3$

$C_1 > C_2 > C_3$

r

S

S

S

S

$L_i$

Figur 21

Figur 22

Figur 23

**Figur 24**

Figur 25

Figur 26

Figur 27

Figur 28

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10042134 C2
- US 20170001243 A1
- WO 2004056510 A1
- DE 102016120998 A1